# EUROPÄISCHE PATENTSCHRIFT

(11) **EP 3 147 073 B1**
(45) Veröffentlichungstag und Bekanntmachung des Hinweises auf die Patenterteilung: **12.06.2019**
(21) Anmeldenummer: 16190178.0
(22) Anmeldetag: 22.09.2016
(51) Int. Cl.: B23Q 1/01, B23Q 39/02

(54) **WERKZEUGMASCHINE, INSBESONDERE MEHRFACHSPINDEL-FRÄSMASCHINE**
MACHINE TOOL, ESPECIALLY MULTIPLE SPINDLE MILLING MACHINE
MACHINE-OUTIL, EN PARTICULIER FRAISEUSE MULTI-BROCHES

(30) Priorität: 22.09.2015 DE 102015218206
(43) Veröffentlichungstag der Anmeldung: 29.03.2017
(73) Patentinhaber: DECKEL MAHO Pfronten GmbH, 87459 Pfronten (DE)
(72) Erfinder: GEISSLER, Alfred, 87459 Pfronten (DE)
(74) Vertreter: MERH-IP Matias Erny Reichl Hoffmann Patentanwälte PartG mbB

(56) Entgegenhaltungen:
- WO-A1-2015/008124
- DE-A1- 3 404 838
- DE-A1-102015 000 503
- US-A- 2 682 698
- US-A- 5 439 431

## Beschreibung

Die vorliegende Erfindung betrifft eine Werkzeugmaschine, insbesondere eine numerisch steuerbare Werkzeugmaschine bzw. Fräsmaschine. Insbesondere betrifft die vorliegende Erfindung eine Mehrfachspindel-Fräsmaschine, Mehrfachspindel-Bohr-maschine bzw. Mehrfachspindel-Fräs-/Bohrmaschine oder eine Mehrfachspindel-Universalfräsmaschine bzw. ein Mehrfachspindel-Bearbeitungszentrum.

### Hintergrund der Erfindung

Im Stand der Technik sind Werkzeugmaschinen mit werkzeugtragender Arbeitsspindel bekannt. Diese sind heutzutage zumeist mit numerischen Steuerungen versehen und z.B. als Fräsmaschinen, Fräszentren, Universal-Fräsmaschinen oder CNC-Bearbeitungszentren mit vier, fünf oder manchmal auch mehr als fünf numerisch ansteuerbaren Linear- und/oder Dreh- bzw. Schwenkachsen bekannt, siehe hierzu z.B. die Werkzeugmaschine gemäß DE 10 2010 064 271 A1.

Abzugrenzen sind derartige Werkzeugmaschinen mit werkzeugtragender Arbeitsspindel von Werkzeugmaschinen mit werkstücktragender Arbeitsspindel, wie z.B. Drehmaschinen, Drehzentren, Doppelspindel-Drehmaschinen, Mehrfachspindel-Drehmaschinen oder Mehrfachspindel-Drehautomaten.

DE 10 2015 000 503 A1 bildet der nächstliegende Stand der Technik und betrifft eine Bearbeitungsvorrichtung zur maschinengestützten Herstellung und Bearbeitung von dentalen Werkstücken, insbesondere von künstlichen Zähnen und/oder anderen dentalen Ersatzteilen, wobei das mindestens eine Werkstück in mindestens einem heb- und senkbaren, sowie drehbar angetriebenen Werkstückhalter eingespannt ist, der in einer Drehachse positioniert ist und das Werkstück zwecks Bearbeitung mindestens einer drehangetriebenen Werkzeugspindel mit einem darauf befestigten Werkzeug zustellt, wobei dem Werkstückhalter auf der einen Seite gegenüberliegend ein weiterer Werkzeughalter mit einer Vielzahl von darauf angeordneten Werkzeugen zugeordnet ist, und dass auf der anderen Seite des Werkstückhalters ein Werkstückwechsler angeordnet ist, in dem die zu bearbeitenden Werkstücke auswechselbar aufgenommen sind.

DE 34 04 838 A1 betrifft ein Bohr- und Fräswerkzeug, bestehend aus einem an einem Ständer vertikal verstellbaren Schlitten, der mit einem beliebigen Werkzeug und einem beliebigen, werkzeugbestückten Zubehörteil für die Bearbeitung von Werkstücken versehen ist, insbesondere von solchen mit mittelgroßen Abmessungen, wobei Werkstück und Werkzeug in zwei horizontalen Bewegungsrichtungen verfahren werden können, wobei ein Spindelkasten (8) mit
einer parallel zu der horizontalen Bewegungsebene verlaufenden Achse vorgesehen ist, der um seine Achse drehbar im Schlitten angeordnet und mit einer Fläche zur Befestigung des werkzeugbestückten Zubehörteils sowie mit mindestens einer Werkzeugspindel versehen ist, die drehbar und mit parallel zur Achse des Spindelkastens verlaufender Achse im letzterem gelagert und mit Werkzeugaufnahmen ausgerüstet ist, wobei die vertikalen und horizontalen Bewegungsabläufe und die Drehung des Spindelkastens durch numerisch gesteuerte Antriebe bewerkstelligt werden.

Es ist immer eine grundsätzliche Aufgabe auf dem Gebiet des Werkzeugmaschinenbaus als auch insbesondere eine zugrunde liegende Aufgabe der vorliegenden Erfindung, eine Werkzeugmaschine mit werkzeugtragender Arbeitsspindel, insbesondere eine Werkzeugmaschine für fräsende und/oder bohrende Bearbeitung eines Werkstücks, bereitzustellen, die gleichzeitig präzise und zuverlässig mit möglichst kleinen Standzeiten arbeitet, als auch kostengünstig, kompakte und effizient bereitgestellt werden kann.

### Zusammenfassung der Erfindung

Gemäß der vorliegenden Erfindung wird eine Werkzeugmaschine vorgeschlagen, insbesondere gemäß Anspruch 1. Die abhängigen Ansprüche betreffen bevorzugte Ausführungsbeispiele der Erfindung.

Gemäß einem ersten Aspekt wird eine Werkzeugmaschine vorgeschlagen, mit einem Maschinengestell, einer an dem Maschinengestell angeordneten Achsschlitten-Baugruppe, die dazu eingerichtet ist, das an der Werkstückspanneinrichtung eingespannte Werkstück mittels einer, zwei oder drei steuerbarer Linearachsen linear zu verfahren, und einer an dem Maschinengestell angeordneten Spindelträger-Baugruppe mit zumindest zwei werkzeugtragenden Arbeitsspindeln.

Vorzugsweise sind die Arbeitsspindeln an einem um eine Revolverachse rotierbaren bzw. verschwenkbaren Revolver in jeweils gleichem Abstand zur Revolverachse angeordnet, und die Spindelachsen der Arbeitsspindeln sind vorzugsweise parallel zueinander und vorzugsweise parallel zur Revolverachse ausgerichtet bzw. ausrichtbar.

Erfindungsgemäß sind die Arbeitsspindeln an dem um die Revolverachse rotierbaren bzw. verschwenkbaren Revolver in jeweils gleichem Abstand zur Revolverachse angeordnet und vorzugsweise weiterhin in einer Richtung mittels einer jeweiligen Linearachse parallel zur Spindelachse und/oder parallel zur Revolverachse verfahrbar, und vorzugsweise sind die Spindelachsen der Arbeitsspindeln parallel zueinander und parallel zur Revolverachse ausgerichtet bzw. ausrichtbar sind.

Hierbei liegt der Erfindung die Idee eines vollkommen neuen und ungewöhnlichen Werkzeugmaschinengrundkonzepts für eine Werkzeugmaschine mit werkzeugtragenden Arbeitsspindeln (im Gegensatz zu Werkzeugmaschinen mit werkstücktragenden Arbeitsspindeln, wie z.B. Drehmaschinen oder Mehrfachspindel-Drehmaschinen) zugrunde, eine Mehrfachspindel-Werkzeugmaschine mit zwei (Doppelspindel-Werkzeugmaschine) oder mehr (Dreifachspindel-Werkzeugmaschine oder Mehrfach-Werkzeugmaschine) werkzeugtragenden Arbeitsspindeln vorzusehen, die an einem rotierbaren Revolver angeordnet sind, der z.B. als eine oder mehrere Drehscheiben oder auch als spindeltragende Trägertrommel ausgebildet sein kann.

Dies ermöglicht es auf vorteilhafte, ungewöhnliche und neuartige Weise, eine präzise arbeitende, kostengünstige, äußerst kompakte und effiziente Werkzeugmaschine mit optimal minimierten Standzeiten zu schaffen, da jeweils zumindest eine (oder mehrere) der Spindeln an einer jeweiligen Arbeitsposition ein Werkstück bearbeiten kann während zumindest an einer anderen Spindel (oder an mehreren anderen Spindeln) an einer jeweiligen Werkzeugwechselposition ein Werkzeugwechsel durchgeführt werden kann, ohne die Bearbeitung des bzw. der Werkstücke für den Werkzeugwechsel zu unterbrechen, wobei die einzigen Unterbrechungen der eigentlichen Bearbeitung des Werkstücks bzw. der Werkstücke durch die äußerst schnellen (insbesondere bei ca. ein bis zwei Sekunden oder sogar unter einer Sekunde) Revolverdrehungen des Revolvers gegeben sind.

Gemäß einem beispielhaften bevorzugten Aspekt kann das Maschinengestell einen Bearbeitungsraum ausbilden, wobei die Achsschlitten-Baugruppe vorzugsweise über dem Bearbeitungsraum auf dem Maschinengestell angeordnet sein kann.

Vorzugsweise wird die Werkstückspanneinrichtung an der Achsschlitten-Baugruppe gehalten. Die Werkstückspanneinrichtung ist vorzugsweise dazu eingerichtet, das Werkstück bzw. eine das Werkstück haltende Werkstückpalette hängend oder seitlich hängend einzuspannen, insbesondere bevorzugt zur Überkopfbearbeitung des an der Werkstückspanneinrichtung hängend eingespannten Werkstücks.

Bei Überkopfbearbeitung ergibt sich der Vorteil, dass ein optimaler Spänefall ohne Verschmutzung des Werkstücks bzw. des Achsschlittenaufbaus im Bearbeitungsraum erreicht werden kann, so dass zudem die Spänefördereinrichtung einfacher gestaltet werden kann oder in machen Ausführungsbeispielen sogar vorteilhaft nur ein externer Späneförderer ohne maschinenintegrierten Fördermechanismus eingesetzt werden kann.

Vorzugsweise umfasst die Werkstückspanneinrichtung einen hängenden Drehtisch mit vertikaler Rotationsachse und/oder eine um eine vertikale Rotationsachse rotierbare Greifeinrichtung zum hängenden Greifen des Werkstücks bzw. der Werkstückpalette. Vorzugsweise ist der Drehtisch und/oder die Greifeinrichtung der Werkstückspanneinrichtung um eine horizontale Dreh- oder Schwenkachse dreh- oder verschwenkbar.

In beispielhaften (ggf. zu der vorstehend beschriebenen beispielhaften Ausführung alternativen) Ausführungsbeispielen umfasst die Werkstückspanneinrichtung vorzugsweise einen Drehtisch mit horizontaler Dreh- oder Schwenkachse und/oder eine um eine horizontale Rotationsachse rotierbare Greifeinrichtung zum seitlich hängenden Greifen des Werkstücks bzw. der Werkstückpalette. Vorzugsweise ist der Drehtisch und/oder die Greifeinrichtung der Werkstückspanneinrichtung um eine vertikale Dreh- oder Schwenkachse dreh- oder verschwenkbar ist.

Gemäß einem beispielhaften bevorzugten Aspekt kann die Werkzeugmaschine eine Fördereinrichtung zum Fördern von Werkstücken umfassen. Insbesondere könnte eine derartige Fördereinrichtung vorzugsweise zum Fördern von Werkstücken mit nach oben oder seitlich ausgerichteter Werkstückpalette eingerichtet sein.

Vorzugsweise ist eine derartige Fördereinrichtung zum Fördern von Werkstücken zu einer Einspannposition in einen Bearbeitungsraum der Werkzeugmaschine zur Aufnahme durch die Werkstückspanneinrichtung von oben zum hängenden oder seitlich hängenden Einspannen eines der Werkstücke an der Werkstückspanneinrichtung eingerichtet, und/oder zum Fördern eines der Werkstücke, insbesondere mit nach oben oder seitlich ausgerichteter Werkstückpalette, aus einer Ausspannposition aus dem Bearbeitungsraum der Werkzeugmaschine nach Lösen des Werkstücks aus der hängenden oder seitlich hängenden Einspannung durch die Werkstückspanneinrichtung eingerichtet.

Gemäß einem beispielhaften bevorzugten Aspekt ist die Achsschlitten-Baugruppe vorzugsweise weiterhin dazu eingerichtet, das an der Werkstückspanneinrichtung eingespannte Werkstück mittels einer steuerbaren ersten Dreh- oder Schwenkachse um eine erste Rotationsachse zu rotieren. Vorzugsweise ist die erste Rotationsachse der ersten Dreh- oder Schwenkachse vertikal ausgerichtet ist.

Vorzugsweise ist die Achsschlitten-Baugruppe zusätzlich oder alternativ weiterhin dazu eingerichtet, das an der Werkstückspanneinrichtung eingespannte Werkstück mittels einer steuerbaren zweiten Dreh- oder Schwenkachse um eine quer oder senkrecht zur ersten Rotationsachse ausgerichtete zweite Rotationsachse zu rotieren. Vorzugsweise ist die zweite Rotationsachse der zweiten Dreh- oder Schwenkachse horizontal ausgerichtet.

Vorzugsweise ist die Revolverachse des rotierbaren Revolvers horizontal ausgerichtet, und vorzugsweise ist die horizontal ausgerichtete, zweite Rotationsachse der zweiten Dreh- oder Schwenkachse parallel oder senkrecht zur Revolverachse des rotierbaren Revolvers ausgerichtet.

Erfindungsgemäß sind eine erste werkzeugtragende Arbeitsspindel und eine zweite Arbeitsspindel der zumindest zwei werkzeugtragenden Arbeitsspindeln relativ zu der Revolverachse gegenüberliegend an dem rotierbaren Revolver angeordnet, wobei die Revolverachse vorzugsweise insbesondere horizontal ausgerichtet ist.

Erfindungsgemäß ist die erste Arbeitsspindel an einer Bearbeitungsposition der Werkzeugmaschine positioniert, wenn die zweite Arbeitsspindel an einer Werkzeugwechselposition der Werkzeugmaschine positioniert ist, und/oder die zweite Arbeitsspindel ist vorzugsweise an der Bearbeitungsposition der Werkzeugmaschine positioniert, wenn die erste Arbeitsspindel an der Werkzeugwechselposition der Werkzeugmaschine positioniert ist.

Erfindungsgemäß ist die Spindelträger-Baugruppe dazu eingerichtet, die Positionierung der ersten Arbeitsspindel, insbesondere bevorzugt an der Arbeits- oder Werkzeugwechselposition, durch Verschwenken des rotierbaren Revolvers um die Revolverachse um 180° mit der Positionierung der zweiten Arbeitsspindel, insbesondere bevorzugt an der Werkzeugwechsel- oder Bearbeitungsposition, zu tauschen.

Alternativ sind eine Anzahl N von werkzeugtragenden Arbeitsspindeln mit N ≥ 2 bzw. N > 2 in einem jeweiligen Winkelabstand eines Winkels α = 360°/ N an dem rotierbaren Revolver angeordnet, wobei die Revolverachse vorzugsweise insbesondere horizontal ausgerichtet ist. Vorzugsweise ist eine erste Arbeitsspindel der N Arbeitsspindeln an einer Bearbeitungsposition der Werkzeugmaschine positioniert, wenn eine zweite Arbeitsspindel der N Arbeitsspindeln an einer Werkzeugwechselposition der Werkzeugmaschine positioniert ist.

Erfindungsgemäß ist die Spindelträger-Baugruppe dazu eingerichtet, die erste Arbeitsspindel durch Drehen des rotierbaren Revolvers um die Revolverachse um den Winkel α = 360°/ N an die Werkzeugwechselposition zu verschwenken und/oder die zweite Arbeitsspindel durch Drehen des rotierbaren Revolvers um die Revolverachse um den Winkel α = 360°/ N in entgegengesetzter Richtung an die Bearbeitungsposition zu verschwenken.

In allen der vorstehend genannten Ausführungen ist es möglich, dass die an der Bearbeitungsposition positionierte Arbeitsspindel mittels eines aufgenommenen Werkzeugs dazu eingerichtet ist, das an der Werkstückspanneinrichtung eingespannte Werkstück zu bearbeiten.

Erfindungsgemäß umfasst die Werkzeugmaschine ein Werkzeugmagazin, das dazu eingerichtet ist, eine Mehrzahl von Werkzeugen vorzuhalten, und/oder eine Werkzeugwechselvorrichtung, die zum Werkzeugwechseln eingerichtet ist und insbesondere vorzugsweise dazu eingerichtet ist, ein einzusetzendes Werkzeug an der an der Werkzeugwechselposition positionierten Arbeitsspindel einzusetzen, ein an der an der Werkzeugwechselposition positionierten Arbeitsspindel aufgenommenes Werkzeug zu entnehmen, und/oder ein an der an der Werkzeugwechselposition positionierten Arbeitsspindel aufgenommenes Werkzeug mit einem aus dem Werkzeugmagazin entnommenen Werkzeug auszuwechseln.

Vorzugsweise ist bzw. sind die jeweils an der bzw. den Bearbeitungsposition(en= positionierte(n) Arbeitsspindel(n) mittels eines jeweils aufgenommenen Werkzeugs dazu eingerichtet, das/die an der Werkstückspanneinrichtung eingespannte(n) Werkstück(e) zu bearbeiten, während die Werkzeugwechselvorrichtung an der/den an der/den Werkzeugwechselposition(en) positionierten Arbeitsspindel(n) ein jeweiliges Werkzeug einsetzt, entnimmt oder mit einem aus dem Werkzeugmagazin entnommenen Werkzeug auswechselt.

Gemäß einem beispielhaften bevorzugten Aspekt umfasst die Werkzeugmaschine eine automatisch öffen- und schließbare Schutzklappenvorrichtung, die in geschlossenem Zustand vorzugsweise einen die Werkstückspanneinrichtung aufweisenden Bearbeitungsraum der Werkzeugmaschine von einem die Werkzeugwechselvorrichtung aufweisenden Werkzeugwechselraum der Werkzeugmaschine trennt.

Vorzugsweise öffnet die Schutzklappenvorrichtung, wenn durch Rotieren des Revolvers eine der Arbeitsspindeln aus der Werkzeugwechselposition oder aus einer Ruheposition bzw. in die Bearbeitungsposition und/oder eine andere der Arbeitsspindeln aus der Bearbeitungsposition oder aus einer Ruheposition bzw. in die Werkzeugwechselposition verschwenkt wird, und/oder schließt vorzugswesie nach dem Rotieren des Revolvers.

Gemäß einem beispielhaften bevorzugten Aspekt können die an dem rotierbaren Revolver angeordneten Arbeitsspindeln feststehend mit zu der Revolverachse parallel ausgerichteten Spindelachsen befestigt, angebracht bzw. gehalten sein.

Gemäß einem weiteren beispielhaften bevorzugten Aspekt können eine oder mehrere der an dem rotierbaren Revolver angeordneten Arbeitsspindeln verschwenkbar befestigt, angebracht bzw. gehalten sein. Vorzugsweise sind die eine oder mehreren verschwenkbaren Arbeitsspindeln parallel zu der Revolverachse ausrichtbar sind und/oder dazu eingerichtet, verschwenkt zu werden, z.B. insbesondere an der Arbeitsposition in einer vertikalen Ebene und/oder in einer horizontalen Ebene relativ zu der Ausrichtung der Revolverachse verschwenkt zu werden.

Gemäß einem weiteren beispielhaften bevorzugten Aspekt können eine oder mehrere der an dem rotierbaren Revolver angeordneten Arbeitsspindeln in einer Richtung mittels einer Linearachse parallel zur Spindelachse und/oder parallel zur Revolverachse verfahrbar sein.

Zusammenfassend wird ein Werkzeugmaschinenkonzept vorgeschlagen, welches es vorteilhaft ermöglicht, auf vorteilhafte, ungewöhnliche und neuartige Weise, eine präzise arbeitende, kostengünstige, äußerst kompakte und effiziente Werkzeugmaschine mit optimal minimierten Standzeiten zu schaffen, insbesondere da jeweils zumindest eine (oder mehrere) der Spindeln an einer jeweiligen Arbeitsposition ein Werkstück bearbeiten kann während zumindest an einer anderen Spindel (oder an mehreren anderen Spindeln) an einer jeweiligen Werkzeugwechselposition ein Werkzeugwechsel durchgeführt werden kann, ohne die Bearbeitung des bzw. der Werkstücke für den Werkzeugwechsel zu unterbrechen, wobei die einzigen Unterbrechungen der eigentlichen Bearbeitung des Werkstücks bzw. der Werkstücke durch die äußerst schnellen (insbesondere bei ca. ein bis zwei Sekunden oder sogar unter einer Sekunde) Revolverdrehungen des Revolvers gegeben sind.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### Kurzbeschreibung der Figuren

**Fig. 1** zeigt eine beispielhafte Perspektivdarstellung einer Werkzeugmaschine gemäß einem Ausführungsbeispiel der Erfindung;
**Fig. 2** zeigt eine beispielhafte Vorderansicht der Werkzeugmaschine aus Fig. 1;
**Fig. 3** zeigt eine beispielhafte Seitenansicht der Werkzeugmaschine aus Fig. 1;
**Fig. 4** zeigt eine beispielhafte Rückansicht der Werkzeugmaschine aus Fig. 1;
**Fig. 5** zeigt eine beispielhafte Draufsicht der Werkzeugmaschine aus Fig. 1;
**Fig. 6** zeigt eine beispielhafte Seitenansicht der Werkzeugmaschine aus Fig. 1 aus entgegengesetzter Richtung in Bezug auf Fig. 3;
**Fig. 7** zeigt eine beispielhafte Schnittdarstellung von Oben gemäß der horizontalen Schnittebene B-B in Fig. 6;
**Fig. 8** zeigt eine beispielhafte Schnittdarstellung von Vorne gemäß der vertikalen Schnittebene A-A in Fig. 6;
**Fig. 9** zeigt eine beispielhafte Perspektivdarstellung der Werkzeugmaschine aus Fig. 1;
**Fig. 10** zeigt eine beispielhafte Perspektivdarstellung der Werkzeugmaschine aus Fig. 1;
**Fig. 11** zeigt eine beispielhafte Perspektivdarstellung der Werkzeugmaschine aus Fig. 1;
**Figs. 12A** und **12B** zeigen beispielhafte Perspektivdarstellungen des Werkzeugmaschinengestells der Werkzeugmaschine aus Fig. 1 (ohne Achsschlitten-Baugruppe, Werkzeugmagazin und Werkzeugwechselvorrichtung);
**Fig. 13** zeigt eine beispielhafte Perspektivdarstellung der Werkzeugmaschine aus Fig. 1 (ohne Werkzeugmagazin und Werkzeugwechselvorrichtung);
**Figs. 14A** und **14B** zeigen beispielhafte Perspektivdarstellungen des Werkzeug-magazins und der Werkzeugwechselvorrichtung der Werkzeugmaschine aus Fig. 1;
**Fig. 15A** zeigt eine beispielhafte Vorderansicht eines Spindelrevolvers der Werkzeugmaschine aus Fig. 1 und **Fig. 15B** zeigt eine beispielhafte Perspektivdarstellung des Spindelrevolvers der Werkzeugmaschine aus Fig. 1;
**Fig. 16** zeigt eine beispielhafte Vorderansicht eines Spindelrevolvers einer Werkzeugmaschine gemäß einem weiteren Ausführungsbeispiel der Erfindung;
**Fig. 17A** zeigt eine beispielhafte Schnittdarstellung mit horizontaler Schnittebene durch einen Spindelrevolver einer Werkzeugmaschine gemäß einem weiteren Ausführungsbeispiel der Erfindung, **Fig. 17B** zeigt eine beispielhafte Schnittdarstellung mit vertikaler Schnittebene durch einen Spindelrevolver einer Werkzeugmaschine gemäß einem weiteren Ausführungsbeispiel der Erfindung und **Fig. 17C** zeigt eine beispielhafte Schnittdarstellung mit horizontaler Schnittebene durch einen Spindelrevolver einer Werkzeugmaschine gemäß einem weiteren Ausführungsbeispiel der Erfindung;
**Fig. 18** zeigt eine beispielhafte Vorderansicht eines Werkzeugträger-Achsschlittens einer Werkzeugmaschine gemäß einem weiteren Ausführungsbeispiel der Erfindung;
**Fig. 19A** zeigt eine beispielhafte Vorderansicht eines Werkzeugträger-Achsschlittens einer Werkzeugmaschine gemäß einem weiteren Ausführungsbeispiel der Erfindung und **Figs. 19B** und **19C** zeigen beispielhafte Seitenansichten des Werkzeugträger-Achsschlittens aus Fig. 19A; und
**Figs. 20A** und **20B** zeigen beispielhafte Vorderansichten eines Werkzeugträger-Achsschlittens einer Werkzeugmaschine gemäß einem weiteren Ausführungsbeispiel der Erfindung.

### Detaillierte Beschreibung der Figuren und bevorzugter Ausführungsbeispiele

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

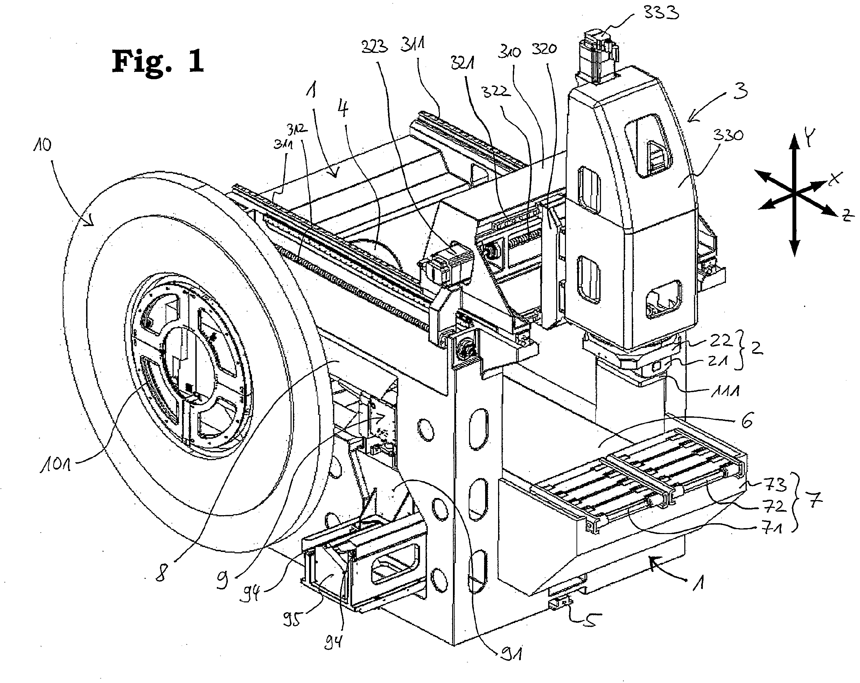

Die Figs. 1 bis 11 betreffen ein erstes Ausführungsbeispiel der vorliegenden Erfindung und zeigen beispielhafte Darstellungen einer Werkzeugmaschine. Lediglich beispielhaft handelt es sich um eine 4-Achs-(Doppel-Spindel-)Fräsmaschine mit drei steuerbaren Linearachsen und einer steuerbaren Drehachse (beispielhaft eine vertikal ausgebildete B-Achse), bei der beispielhaft alle vier steuerbaren Achsen das Werkstück verfahren können und die Bearbeitungsposition der bearbeitenden Arbeitsspindel bei Bearbeitung des Werkstücks beispielhaft ortsfest bleibt.

Beispielhaft ist die Werkzeugmaschine gemäß Figs. 1 bis 11 insbesondere als numerisch steuerbare 4-Achs-Fräsmaschine mit vier antreibbaren Achsen X (z.B. X-Achse 32), Y (z.B. Y-Achse 33), Z (z.B. Z-Achse 31) und B (z.B. B-Achse) ausgebildet, insbesondere mit drei beispielhaft orthogonal zueinander ausgerichteten Linearachsen X, Y und Z und einer Drehachse B (B-Achse) mit beispielhaft zur Y-Achse parallel ausgerichteter Rotation-sachse.

In weiteren Ausführungsbeispielen ist es möglich eine oder mehrere der bereitgestellten Achsen wegzulassen bzw. eine oder mehrere Linear- und/oder Schwenk- bzw. Drehachsen vorzusehen, z.B. auch eine oder mehrere Linear- und/oder Schwenk- bzw. Drehachsen zum Verfahren des Werkzeugs.

Hierbei sei erwähnt, dass der Unterschied zwischen einer Drehachse und einer Schwenkachse der ist, dass eine Drehachse in beide Richtungen um ihre Rotationsachse rotatorisch steuerbar ist, wobei ggf. eine Drehung um 360 Grad oder mehr oder ggf. um 720 Grad oder mehr möglich ist, und dass eine Schenkachse in beide Richtungen um ihre Rotationsachse zwischen einer ersten und einer zweiten Winkelposition rotatorisch steuerbar ist, wobei die Winkelpositionen festgelegt sind ggf. mit einem Winkelabstand von 360 Grad oder weniger, z.B. als 90 Grad, 120 Grad, 180 Grad, 270 Grad oder 360 Grad.

Weiterhin kann die Werkzeugmaschine eine numerische Maschinensteuerung (z.B. NC- bzw. CNC-Steuerung ggf. mit einer oder mehrerer NC- und PLC-Steuereinheiten) und/oder ein Maschinensteuerungs-Bedienpult umfassen (nicht dargestellt), sowie ggf. ein Werkzeugmaschinengehäuse aufweisen (nicht dargestellt).

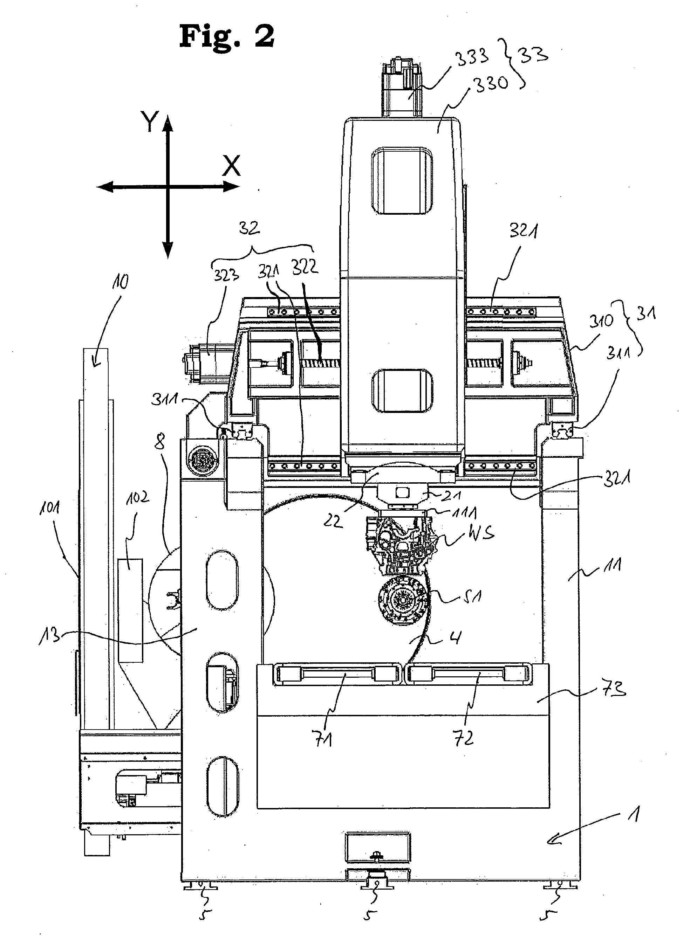

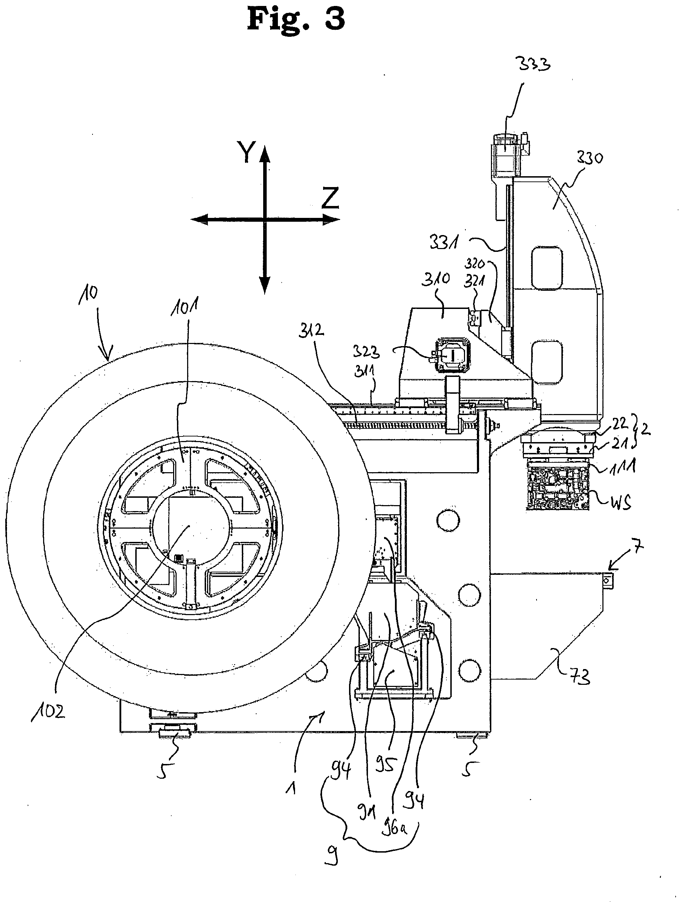

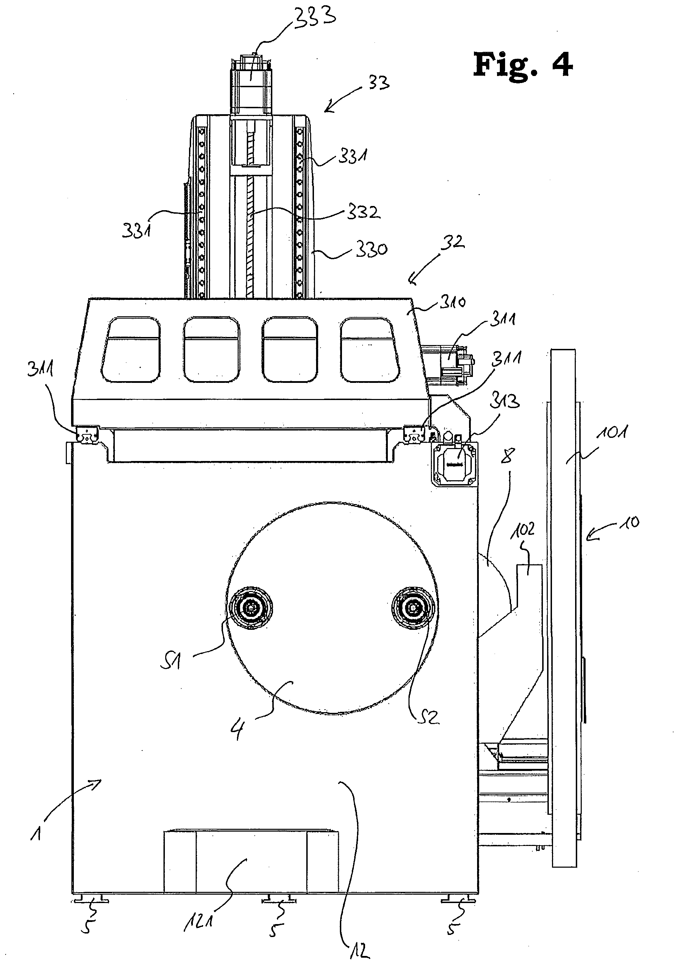

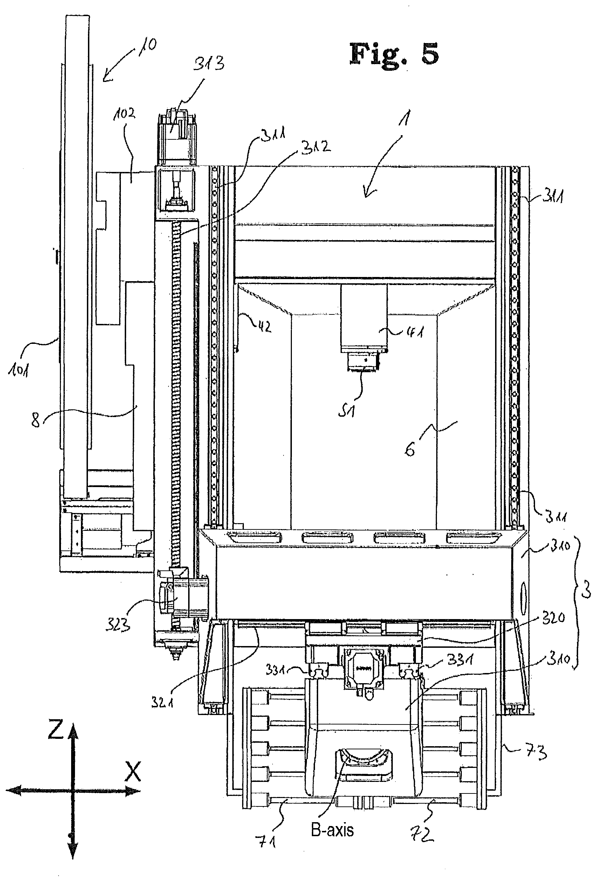

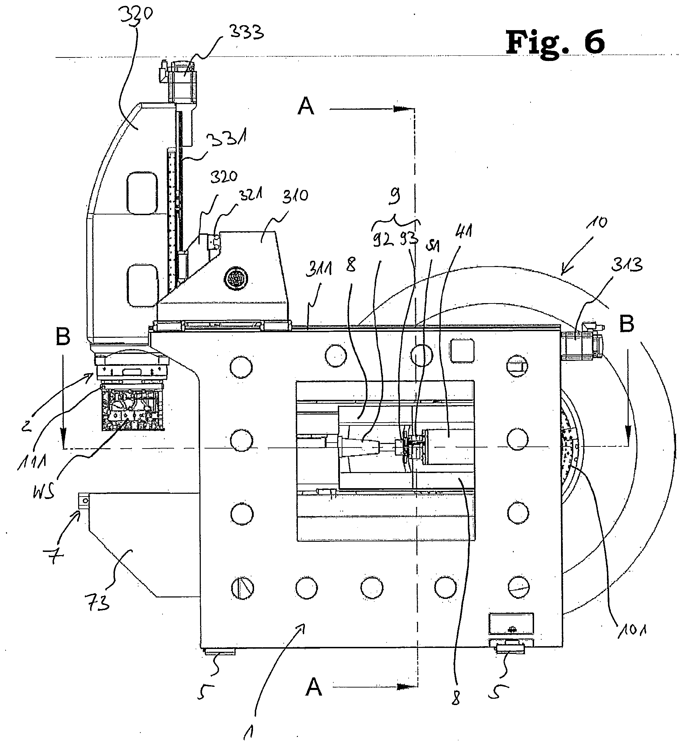

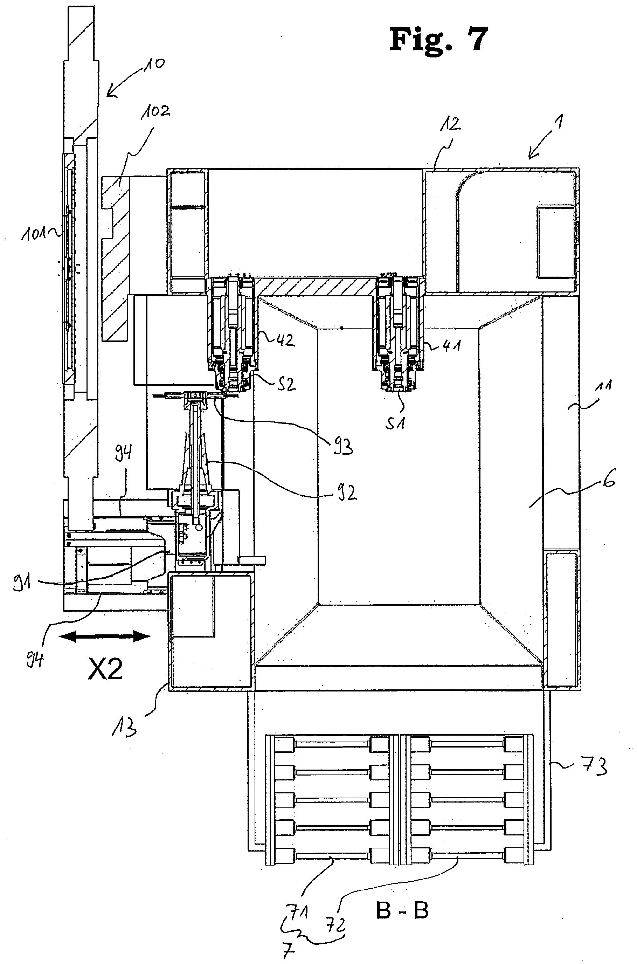

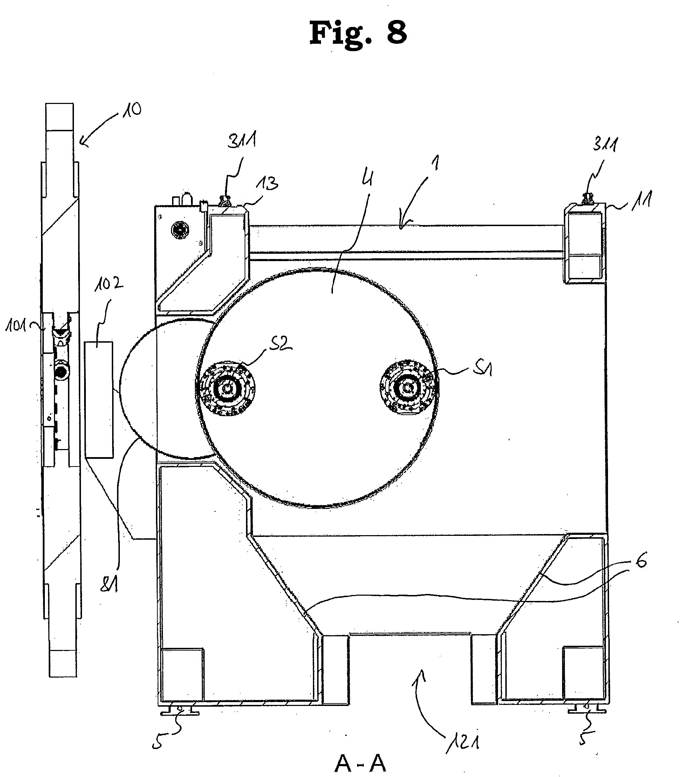

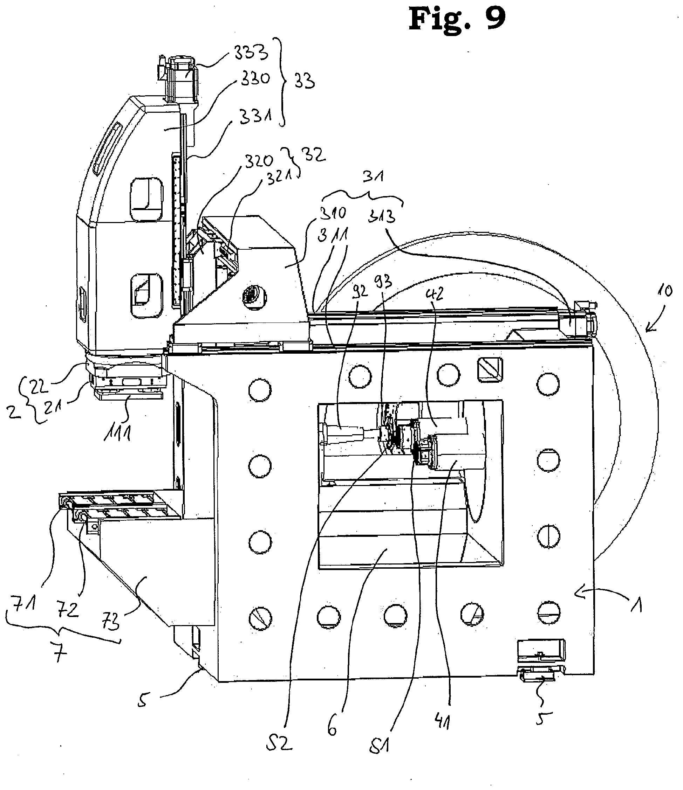

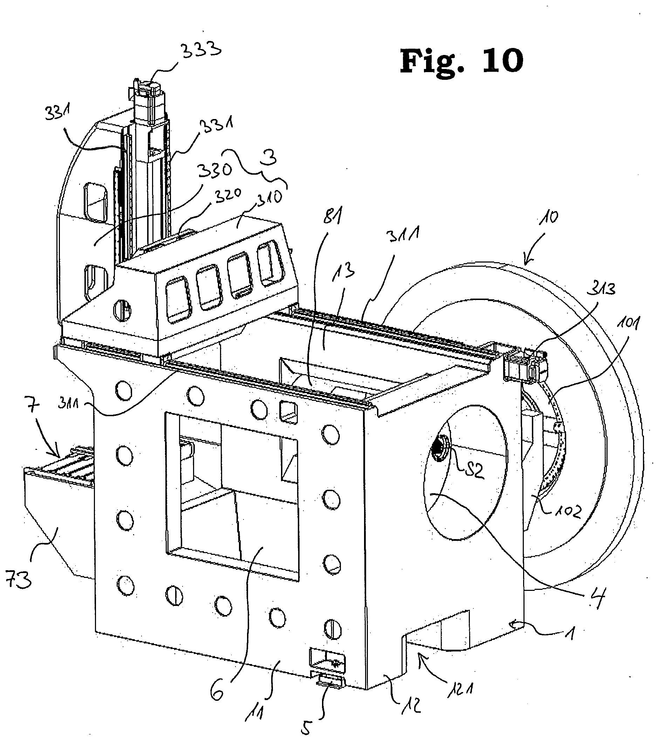

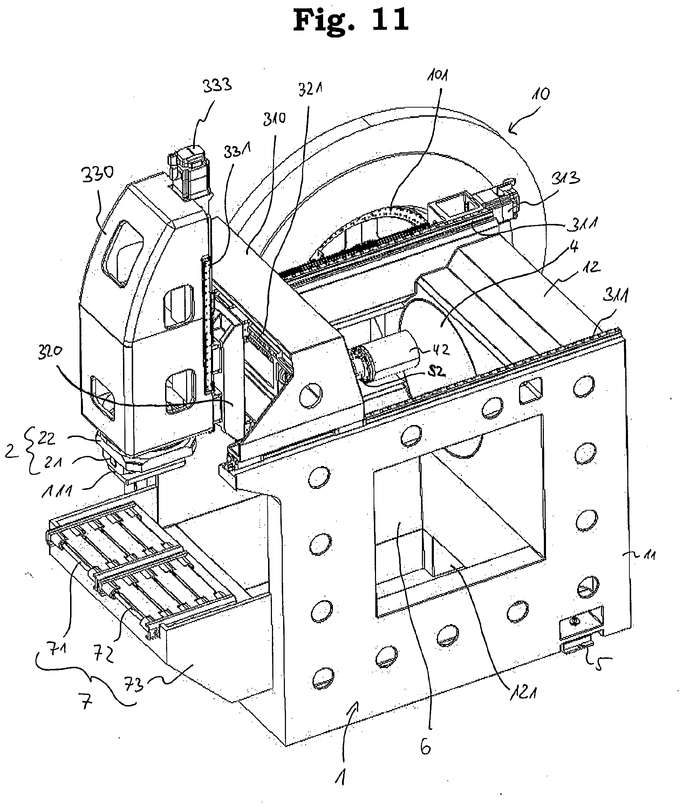

Betreffend das Ausführungsbeispiel gemäß Figs. 1 bis 11 zeigen: **Fig. 1** eine beispielhafte Perspektivdarstellung der Werkzeugmaschine (von schräg links-vorne-oben), **Fig. 2** eine beispielhafte Vorderansicht der Werkzeugmaschine aus Fig. 1, **Fig. 3** eine beispielhafte Seitenansicht der Werkzeugmaschine (von linker Seite), **Fig. 4** eine beispielhafte Rückansicht der Werkzeugmaschine aus Fig. 1, **Fig. 5** eine beispielhafte Draufsicht der Werkzeugmaschine aus Fig. 1, **Fig. 6** eine beispielhafte Seitenansicht der Werkzeugmaschine aus Fig. 1 aus entgegengesetzter Richtung in Bezug auf Fig. 3 (von rechter Seite) **Fig. 7** eine beispielhafte Schnittdarstellung von Oben gemäß der horizontalen Schnittebene B-B in Fig. 6, **Fig. 8** eine beispielhafte Schnittdarstellung von Vorne gemäß der vertikalen Schnittebene A-A in Fig. 6, **Fig. 9** eine weitere beispielhafte Perspektivdarstellung der Werkzeugmaschine aus Fig. 1 (von schräg rechts-vorne-oben), **Fig. 10** eine weitere beispielhafte Perspektivdarstellung der Werkzeugmaschine aus Fig. 1 (von schräg rechts-hinten-oben) und **Fig. 11** eine weitere beispielhafte Perspektivdarstellung der Werkzeugmaschine aus Fig. 1 (von schräg rechts-vorne-oben).

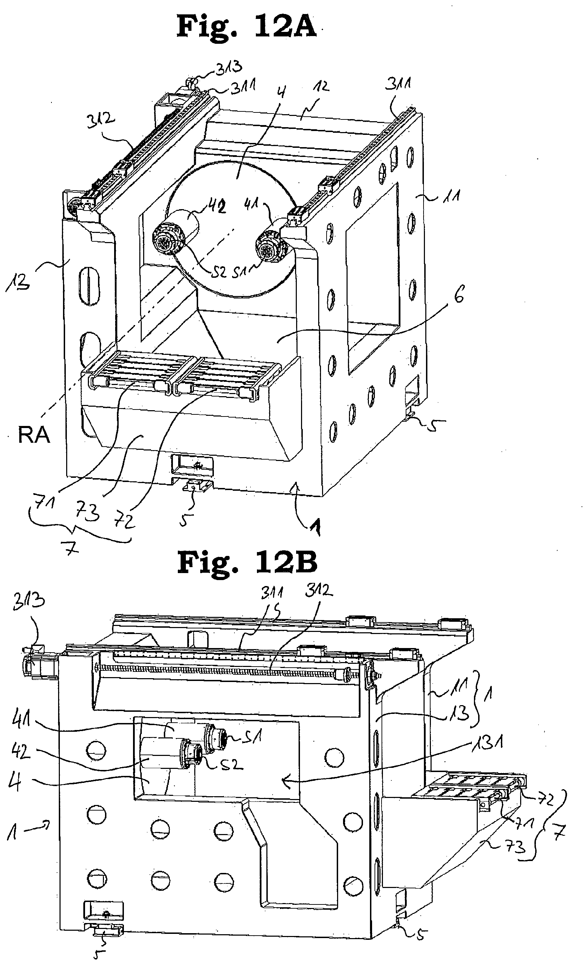

Die Werkzeugmaschine gemäß Fig. 1 umfasst ein auf Standfußelementen 5 aufstellbares Maschinengestell 1. Die beispielhafte Struktur des Maschinengestells 1 ist neben den Figs. 1 bis 11 noch gut in den Figs. 12A bis 13 zu erkennen.

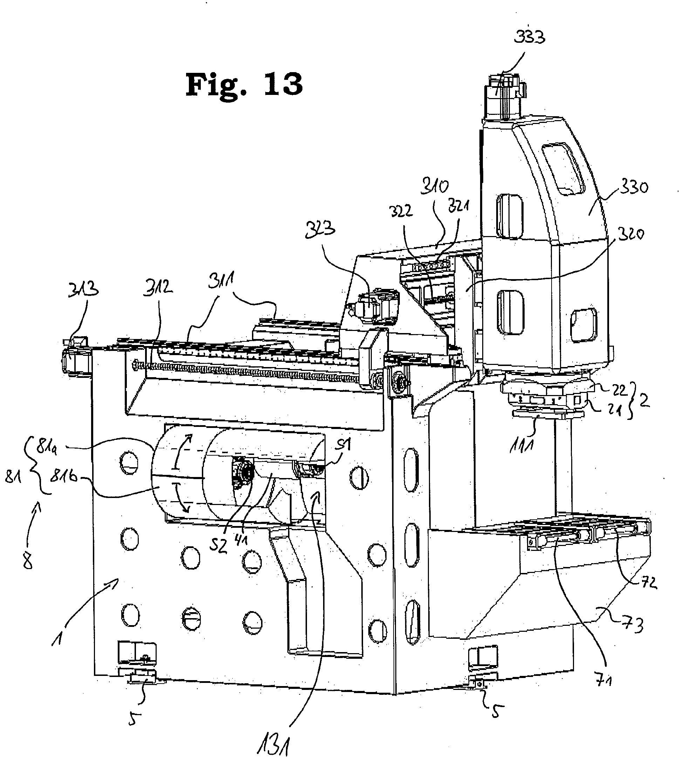

Hierbei zeigen: **Figs. 12A** und **12B** beispielhafte Perspektivdarstellungen des Werkzeugmaschinengestells der Werkzeugmaschine aus Fig. 1 (ohne Achsschlitten-Baugruppe, Werkzeugmagazin und Werkzeugwechselvorrichtung) und **Fig. 13** eine beispielhafte Perspektivdarstellung der Werkzeugmaschine aus Fig. 1 (ohne Werkzeugmagazin und Werkzeugwechselvorrichtung).

Das Maschinengestell 1 umfasst einen ersten Trägerabschnitt 11 (auf der von Vorne gesehen rechten Seite der Werkzeugmaschine), einen zweiten (hinteren) Trägerabschnitt 12 und einen dritten Trägerabschnitt 13 (auf der von Vorne gesehen linken Seite der Werkzeugmaschine). Beispielhaft tragen der erste Trägerabschnitt 11 und der zweite Trägerabschnitt 12 des Maschinengestells 1 eine beispielhaft oberhalb des Maschinengestells 1 angeordnete Achsschlitten-Baugruppe 3.

Die Achsschlitten-Baugruppe 3 umfasst beispielhaft einen ersten Achsschlitten 310 der Z-Achse 31, einen zweiten Achsschlitten 320 der X-Achse 32 und einen dritten Achsschlitten 330 der Y-Achse 33.

Die Z-Achse 31 umfasst neben dem ersten Achsschlitten 310 beispielhaft weiterhin erste Achsführungen 311, auf denen beispielhaft der erste Achsschlitten 310 geführt ist, eine drehbar gelagerte erste Gewindewelle 312 und einen ersten Achsantrieb 313 zum rotatorischen Antreiben der ersten Gewindewelle 312.

Die ersten Achsführungen 311 verlaufen beispielhaft in horizontaler Richtung (Z-Richtung), die sich beispielhaft von der Vorderseite der Werkzeugmaschine horizontal zur Rückseite der Werkzeugmaschine erstreckt, und sind beispielhaft auf dem Maschinengestell 1 und insbesondere auf den Trägerabschnitten 11 und 12 angeordnet. Die erste Gewindewelle 312 und der erste Achsantrieb 313 sind beispielhaft auf dem dritten Trägerabschnitt 13 des Maschinengestells 1 angeordnet und die erste Gewindewelle 312 erstreckt sich beispielhaft horizontal und parallel zu der auf dem dritten Trägerabschnitt 13 verlaufenden Achsführung 311.

Der erste Achsschlitten 310 lagert beispielhaft horizontal linear verfahrbar auf den ersten Achsführungen 311 und umfasst beispielhaft eine auf der ersten Gewindespindel 312 auf- bzw. angesetzte Gewindemutter (nicht dargestellt), so dass ein lineares Verfahren des ersten Achsschlittens 310 in Richtung der ersten Achsführungen 311 mittels der Koppelung über die erste Gewindespindel 312 durch den ersten Antrieb 313 angetrieben werden kann.

Die X-Achse 32 umfasst beispielhaft neben dem zweiten Achsschlitten 320 weiterhin zweite Achsführungen 321, auf denen der zweite Achsschlitten 320 beispielhaft geführt ist, eine drehbar gelagerte zweite Gewindewelle 322 und einen zweiten Achsantrieb 323 zum rotatorischen Antreiben der zweiten Gewindewelle 322.

Die zweiten Achsführungen 321 verlaufen beispielhaft in horizontaler Richtung (X-Richtung), die sich beispielhaft von der linken Seite der Werkzeugmaschine horizontal zur rechten Seite der Werkzeugmaschine und insbesondere beispielhaft senkrecht zur Z-Richtung der Z-Achse 31 erstreckt, und sind beispielhaft an dem ersten Achsschlitten 310 der Z-Achse 31 angeordnet. Die zweite Gewindewelle 322 und der zweite Achsantrieb 323 sind beispielhaft auf dem ersten Achsschlitten 310 angeordnet und die zweite Gewindewelle 322 erstreckt sich beispielhaft horizontal und parallel zu den auf dem ersten Achsschlitten 310 verlaufenden Achsführungen 321.

Der zweite Achsschlitten 320 lagert beispielhaft horizontal linear verfahrbar auf den zweiten Achsführungen 321 und umfasst beispielhaft eine auf der zweiten Gewindespindel 322 auf- bzw. angesetzte Gewindemutter (nicht dargestellt), so dass ein lineares Verfahren des zweiten Achsschlittens 320 in Richtung der zweiten Achsführungen 321 mittels der Koppelung über die zweite Gewindespindel 322 durch den zweiten Antrieb 323 angetrieben werden kann.

Die Y-Achse 33 umfasst neben dem dritten Achsschlitten 330 beispielhaft weiterhin dritte Achsführungen 331, auf denen der dritte Achsschlitten 330 beispielhaft geführt ist, eine drehbar gelagerte zweite Gewindewelle 332 und einen dritten Achsantrieb 333 zum rotatorischen Antreiben der dritten Gewindewelle 332.

Die dritten Achsführungen 331 verlaufen beispielhaft in vertikaler Richtung (Y-Richtung), die sich beispielhaft senkrecht zur Z-Richtung der Z-Achse 31 und senkrecht zur X-Richtung der X-Achse 32 erstreckt, und sind beispielhaft an dem dritten Achsschlitten 330 der Y-Achse 33 angeordnet. Die dritten Gewindewelle 332 und der dritte Achsantrieb 333 sind beispielhaft auf dem dritten Achsschlitten 330 angeordnet und die dritte Gewindewelle 332 erstreckt sich beispielhaft vertikal und parallel zu (und zwischen den) auf dem dritten Achsschlitten 330 verlaufenden Achsführungen 331.

Der dritte Achsschlitten 330 lagert beispielhaft vertikal linear verfahrbar mit den dritten Achsführungen 331 auf dem zweiten Achsschlitten 320. Die Y-Achse 33 umfasst beispielhaft eine an dem zweiten Achsschlitten 320 gehaltene und auf der dritten Gewindespindel 332 auf- bzw. angesetzte Gewindemutter (nicht dargestellt), so dass ein lineares Verfahren des dritten Achsschlittens 330 in Richtung der dritten Achsführungen 331 an dem zweiten Achsschlitten 320 mittels der Koppelung über die dritte Gewindespindel 332 durch den dritten Antrieb 333 angetrieben werden kann.

Auf der unteren Seite des dritten Achsschlittens 330 ist beispielhaft eine Werkstückspanneinrichtung 2 mit einer an einem Werkstückpalettenhalter 22 gehaltenen Greifeinrichtung 21 angeordnet. Die Greifeinrichtung 21 ist dazu eingerichtet, zum Einspannen eines Werkstücks WS an dem Werkstückpalettenhalter 22 der Werkstückspanneinrichtung 2 eine Werkstückpalette 111 zu greifen bzw. einzuspannen.

Hierbei ist die Werkzeugmaschine des Ausführungsbeispiels gemäß Fig. 1 beispielhaft dazu eingerichtet, Werkstücke WS in Überkopfbearbeitung an der Werkzeugmaschine zu bearbeiten, z.B. indem ein an einer Werkstückpalette 111 befestigtes Werkstück WS zur Überkopfbearbeitung an der Werkzeugmaschine hängend (bzw. kopfüber hängend) mit nach oben weisender Werkstückpalette 111 an dem Werkstückpalettenhalter 22 der Werkstückspanneinrichtung 2 eingespannt werden kann; siehe z.B. Figs. 2, 3 und 6.

Durch die hängende Überkopfbearbeitung eines Werkstücks WS ergibt sich vorteilhaft ein optimales Spänefallverhalten beim zerspanenden Bearbeiten des Werkstücks WS, da die Späne ohne Hindernis einfach nach unten fallen können, wo zum Auffangen der Späne beispielhaft eine einfach geformte (z.B. trichterförmig, wannenförmig oder kastenförmig) Späneauffangwanne 6 bereitgestellt ist. Unterhalb des hängend eingespannten Werkstücks WS müssen vorteilhaft keine Antriebs- oder Bearbeitungsbauteile angeordnet werden, die durch Spänefall verschmutzt werden könnten, und es ergibt sich somit ein vorteilhaft ungehinderter Spänefall nach unten ggf. im gesamten Bearbeitungsraum der Werkzeugmaschine, siehe insbesondere die Schnittdarstellung gemäß Fig. 5.

Hierbei muss insbesondere kein aufwendiger und platzraubender, maschinenintegrierter Spänefördermechanismus vorgesehen werden, sondern es ist vorteilhaft vollkommen ausreichend, platzsparend und bei einfacher kostengünstiger Bauweise einen einfach aufgebauten Späneförderer (ggf. nach herkömmlicher Bauweise) zu verwenden, der einfach mit dem Förderabschnitt direkt in die Späneabführöffnung 121 in dem hinteren Trägerabschnitt 12 des Maschinengestells 1 eingeschoben werden kann, insbesondere ohne eine weitere komplizierte, kostspielige, maschinenintegrierte Spänefördereinrichtung vorsehen zu müssen.

Wie bereits vorstehend beschrieben umfasst das Maschinengestell 1 bespielhaft seitlich erste und dritte Trägerabschnitte 11 und 13, die beispielhaft die vorstehend beschriebene Achsschlitten-Baugruppe 3 tragen, sowie einen hinteren Trägerabschnitt 12, in dem beispielhaft die vorstehend beschriebene Späneabführöffnung 121 ausgebildet ist (siehe z.B. Figs. 4, 8 und 10).

Zwischen den Trägerabschnitten 11, 12 und 13 wird beispielhaft ein Bearbeitungsraum der Werkzeugmaschine ausgebildet, in dem ein an der vorstehend beschriebenen Werkstückspanneinrichtung 2 eingespanntes Werkstück WS bearbeitet werden kann. Auf der Unterseite des Bearbeitungsraums zwischen den Trägerabschnitten 11, 12 und 13 ist beispielhaft die vorstehend beschriebene Späneauffangwanne 6 angeordnet (siehe z.B. Figs. 5, 7 und 8).

An der hinteren Seite der Werkzeugmaschine ist beispielhaft an dem Trägerabschnitt 12 des Maschinengestells 1 ein drehbar gelagerter spindeltragender Revolver 4 gehalten bzw. angeordnet. Der Revolver 4 ist beispielhaft als Drehscheibe ausgebildet, kann allerdings in weiteren Ausführungsbeispielen z.B. auch als Drehtrommel ausgebildet sein, wie es z.B. von Mehrfachspindel-Drehmaschinen für werkstücktragende Spindeln bekannt ist.

Beispielhaft trägt der Revolver 4 der Werkzeugmaschine gemäß dem Ausführungsbeispiel aus Figs. 1 bis 11 zwei werkzeugtragende Arbeitsspindeln S1 und S2, die beispielhaft in Spindelgehäusen 41 und 42 rotatorisch antreibbar gehalten und gelagert sind. Die Spindelgehäuse 41 und 42 umfassen bevorzugt im Innern jeweilige (nicht dargestellte) Spindelantriebe zum Antreiben der Arbeitsspindeln S1 und S2 bzw. zum rotatorischen Antreiben von an den Arbeitsspindeln S1 und S2 aufgenommenen Werkzeugschnittstellen bzw. Werkzeugen, insbesondere Fräs- oder Bohrwerkzeugen.

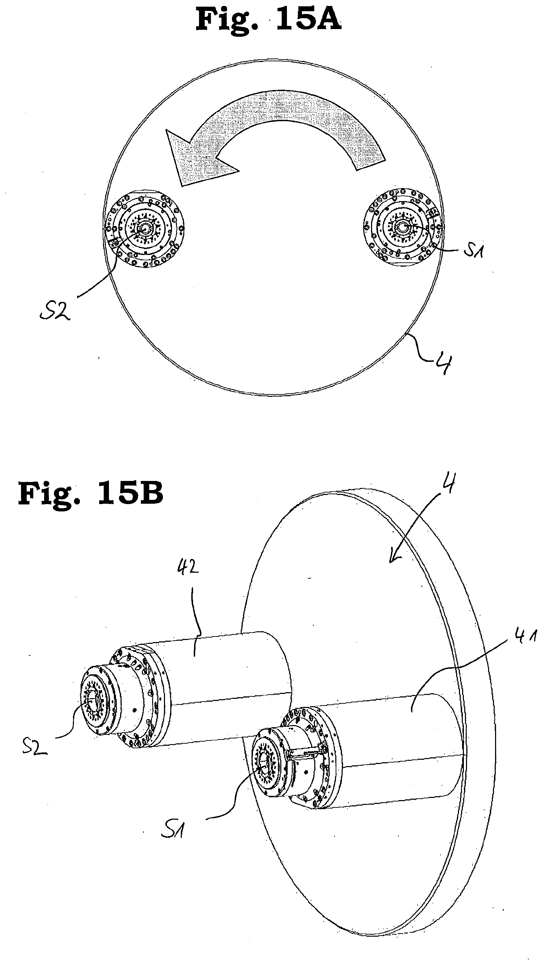

**Fig. 15A** zeigt eine beispielhafte Vorderansicht eines Spindelrevolvers 4 der Werkzeugmaschine aus Fig. 1 (beispielhaft als Drehscheibe ausgebildet) und **Fig. 15B** zeigt eine beispielhafte Perspektivdarstellung des Spindelrevolvers der Werkzeugmaschine aus Fig. 1.

In Figs. 1, 2, 4, 5, 7, 8 und 9 ist der Revolver 4 beispielhaft derart ausgerichtet, dass die erste Arbeitsspindel S1 an einer Arbeitsposition (Bearbeitungsposition) positioniert ist, die sich beispielhaft mittig in Bezug auf den Bearbeitungsraum zwischen den Trägerabschnitten 11 und 13 des Maschinengestells 1 befindet, siehe Figs. 5, 7, 9 und 12A bzw. 12B.

Beispielhaft ist die zweite Arbeitsspindel S2 hierbei an einer Werkzeugwechselposition positioniert, wenn die erste Arbeitsspindel S1 an der Arbeitsposition gemäß Fig.1 positioniert ist (siehe z.B. Figs. 7, 8, 9 und 12A bzw. 12B).

Der Revolver 4 ist beispielhaft als kreisrunde Drehscheibe ausgebildet, die um die mittige Revolverachse rotierbar bzw. verschwenkbar an dem Trägerabschnitt 12 des Maschinengestells 1 gelagert ist. Die Arbeitsspindeln S1 und S2 mit ihren Spindelgehäusen 41 und 42 sind beispielhaft in gleichem Abstand zum Mittelpunkt bzw. zur Revolverachse des Revolvers 4 angeordnet und insbesondere beispielhaft auf gegenüberliegenden Seiten des Mittelpunkts bzw. der Revolverachse des Revolvers 4.

Dies ermöglicht es vorteilhaft, durch Rotieren bzw. Verschenken des Revolvers 4 um die Revolverachse um einen Winkel von 180° im Uhrzeigersinn oder auch gegen den Uhrzeigersinn, die erste Arbeitsspindel S1 aus der Bearbeitungsposition gemäß Fig. 1 in die Werkzeugwechselposition zu rotieren bzw. zu verschwenken, an der vor dem Drehen des Revolvers 4 die zweite Arbeitsspindel S2 positioniert ist, und zeitgleich mit der selben Drehung des Revolvers 4 um die Revolverachse um den Winkel von 180°, die zweite Arbeitsspindel S2 aus der Werkzeugwechselposition gemäß Figs. 7 und 8 in die Bearbeitungsposition zu rotieren bzw. zu verschwenken, an der vor Drehen des Revolvers 4 die erste Arbeitsspindel S1 positioniert ist. Somit kann ein vorteilhaft schneller und effizienter Spindelpositionstausch durch den rotierbaren Revolver 4 ermöglicht werden.

Analog zu dem Verfahren der vorstehend beschriebenen Linearachsschlitten 310 bis 330 der Achsschlitten-Baugruppe 3 kann die Rotation des Revolvers über einen nicht dargestellten Antrieb z.B. über eine numerische Steuereinrichtung (CNC-Steuereinheit und/oder PLC-Steuereinheit, ggf. über ein NC-Programm oder eine manuelle Eingabe an einem Bedienpult der numerischen Steuerung durch einen Bediener) gesteuert werden.

Für den Werkzeugwechsel an der Werkzeugmaschine sind weiterhin beispielhaft ein Werkzeugmagazin 10 und eine Werkzeugwechselvorrichtung 9 vorgesehen. Die Werkzeugwechselvorrichtung 9 ist beispielhaft an einer in dem dritten Trägerabschnitt 13 des Maschinengestells 1 ausgebildeten Werkzeugwechselöffnung 131 (siehe z.B. Fig. 13) angeordnet. Das Werkzeugmagazin 10 ist beispielhaft an der Außenseite des dritten Trägerabschnitts 13 des Maschinengestells 1 angeordnet und beispielhaft über einen Werkzeugmagazinträger 102 an dem dritten Trägerabschnitt 13 gehalten oder befestigt.

Beispielhaft ist das Werkzeugmagazin 10 als Radmagazin ausgebildet und umfasst ein werkzeugtragendes Magazinrad 101, das an dem Werkzeugmagazinträger 102 drehbar gelagert und gehalten ist, der beispielhaft an dem Trägerabschnitt 13 des Maschinengestells 1 angebracht bzw. anbringbar ist. In weiteren Ausführungsbeispielen kann der Werkzeugmagazinträger auch als Ständer bzw. Ständergestell ausgebildet sein, das ggf. separat von dem Maschinengestell 1 und unabhängig neben oder hinter der Werkzeugmaschine aufstellbar sein kann.

Es sei hervorgehoben, dass die vorliegende Erfindung in keinster Weise auf Werkzeugmaschinen mit integriertem Werkzeugmagazin beschränkt ist, und dass die vorliegende Erfindung zudem in keinster Weise auf eine bestimmte Ausführung eines Werkzeugmagazins, wie z.B. das in Fig. 1 lediglich beispielhaft gezeigte Radmagazin, beschränkt ist, und dass vielmehr eine Vielzahl von unterschiedlichen Werkzeugmagazintypen in weiteren Ausführungsbeispielen Anwendung finden können, insbesondere z.B. Regalmagazine, Kettenmagazine, Mehrfachrad-Werkzeugmagazine oder gar Hybrid-Werkzeugmagazine, die verschiedene Typen von Werkzeugmagazinen in einem Werkzeugmagazin kombinieren.

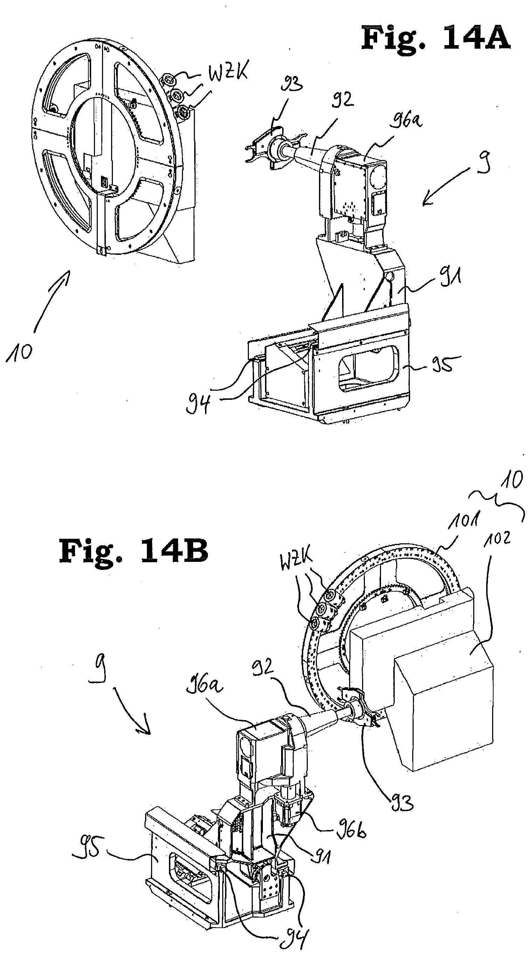

**Figs. 14A** und **14B** zeigen beispielhafte Perspektivdarstellungen des Werkzeugmagazins 10 und der Werkzeugwechselvorrichtung 9 der Werkzeugmaschine aus Fig. 1.

Das Radmagazin bzw. das Magazinrad 101 des Werkzeugmagazins 10 ist dazu eingerichtet, umfänglich eine Mehrzahl von Werkzeugen bzw. werkzeughaltenden Werkzeugschnittstellen (z.B. Steilkegel-Werkzeugschnittstellen, Hohlschaftkegel-Werk-zeugschnittstellen und/oder Morsekegel-Werkzeugschnittstellen) zu halten, zu lagern bzw. vorzuhalten, insbesondere bevorzugt mit radialer Ausrichtung der Werkzeugachsen. Hierzu kann das Radmagazin an dem Magazinrad umfänglich eine Mehrzahl von Werkzeugköchern WSK zur Aufnahme von Werkzeugen bzw. Werkzeugschnittstellen umfassen, siehe z.B. Figs. 14A und 14B.

Die Werkzeugwechselvorrichtung 9 umfasst beispielhaft einen Werkzeugwechsler-Schlittenträger 95, der beispielhaft an dem dritten Trägerabschnitt 13 des Maschinen-gestells 1 der Werkzeugmaschine gemäß Fig. 1 befestigbar bzw. befestigt ist, siehe z.B. Fig. 1.

An dem Werkzeugwechsler-Schlittenträger 95 sind beispielhaft horizontal verlaufende Werkzeugwechsler-Achsführungen 94 angeordnet, die beispielhaft parallel zu der Richtung der vorstehend beschriebenen X-Achse 32, d.h. insbesondere beispielhaft parallel zu den zweiten Achsführungen 321 horizontal von links nach rechts verlaufen. Auf den Werkzeugwechsler-Achsführungen 94 ist beispielhaft ein Werkzeugwechsler-Achs-schlitten 91 linear verfahrbar geführt, und auf dem Werkzeugwechsler-Achsschlitten 91 sind beispielhaft ein Werkzeugwechsler-Antriebsgehäuse 96a mit einem Doppelgreifer-Schwenkantrieb 96b und ein Werkzeugwechsler-Greiferträger 92 angeordnet, wobei der Werkzeugwechsler-Greiferträger 92 beispielhaft einen durch den Doppelgreifer-Schwenk-antrieb 96b schwenkbaren, drehbar gelagerten Werkzeugwechsel-Doppelgreifer 93 hält.

Der Werkzeugwechsel-Doppelgreifer 93 ist hierbei beispielhaft als herkömmlicher Doppelgreifer ausgebildet, der auf gegenüberliegenden Seiten jeweils Greifabschnitte für Werkzeuge bzw. Werkzeugschnittstellen aufweist, die z.B. dazu geeignet sind, in Greiferrillen der Werkzeugschnittstellen einzugreifen, um Werkzeuge im Werkzeugmagazin 10 zu entnehmen oder einzusetzen bzw. um Werkzeuge an der in der Werkzeugwechselposition positionierten Arbeitsspindel S2 zu entnehmen oder einzusetzen und durch Verschwenken des Werkzeugwechsel-Doppelgreifers 93 um 180° im oder gegen den Uhrzeigersinn zu wechseln.

Hierzu ist der Werkzeugwechsel-Doppelgreifer 93 bevorzugt weiterhin an dem Werkzeugwechsler-Greiferträger 92 horizontal in einer Richtung parallel zu der Richtung der Z-Achse bzw. parallel zu den Spindelachsen verfahrbar. Die Verfahrbarkeit des Werkzeugwechsler-Achsschlittens 91 ermöglicht vorteilhaft das Verfahren des Werkzeugwechsler-Greiferträgers 92 mit dem Werkzeugwechsel-Doppelgreifer 93 zwischen einer Entnahmeposition am Werkzeugmagazin 10 und der Werkzeugwechselposition der Werkzeugmaschine.

Ein großer Vorteil der Werkzeugmaschine gemäß dem Ausführungsbeispiel nach Figs. 1 bis 11 ist nunmehr die Möglichkeit, ein an der Arbeitsspindel S2, die sich an der Werkzeugwechselposition der Werkzeugmaschine befindet (siehe z.B. Fig. 7), aufgenommenes Werkzeug auszuwechseln, während gleichzeitig das an der Werkzeugspanneinrichtung 2 eingespannte Werkstück WS mittels eines an der Arbeitsspindel S1, die sich an der Bearbeitungsposition der Werkzeugmaschine befindet (siehe z.B. Fig. 7), aufgenommenen Werkzeugs zu bearbeiten.

Sobald das an der Werkstückpanneinrichtung 2 eingespannte Werkstück WS mit dem an der Arbeitsspindel S2 eingewechselten Werkzeug bearbeitet werden soll, kann die Arbeitsspindel S2 beispielhaft mit dem zu benutzenden Werkzeug durch einfaches und schnelles Verschwenken des Revolvers 4 um 180° im oder gegen den Uhrzeigersinn mit Spindelwechselzeiten von ca. 1 oder 2 Sekunden von der Werkzeugwechselposition an die Bearbeitungsposition verbracht werden, so dass die Bearbeitung des Werkstücks WS praktisch ohne jegliche Werkzeugwechselzeit weiterbearbeitet werden kann. Gleichzeitig kann die Arbeitsspindel S1 im gleichen Schritt an die Werkzeugwechselposition verbracht werden, so dass ein Werkzeugwechsel an der Arbeitsspindel S1 möglich ist, ohne dass dafür die Bearbeitung des Werkstücks merklich unterbrochen werden müsste.

Sobald das an der Werkstückspanneinrichtung 2 eingespannte Werkstück WS mit dem dann an der Arbeitsspindel S1 eingewechselten Werkzeug bearbeitet werden soll, kann die Arbeitsspindel S1 mit dem zu benutzenden Werkzeug erneut durch einfaches und schnelles Verschwenken des Revolvers 4 um 180° im oder gegen den Uhrzeigersinn mit Spindelwechselzeiten von ca. 1 oder 2 Sekunden wieder von der Werkzeugwechselposition an die Bearbeitungsposition verbracht werden, so dass die Bearbeitung des Werkstücks WS erneut praktisch ohne Werkzeugwechselzeit weiterbearbeitet werden kann.

Dies ergibt eine hervorragend effiziente Bearbeitungszeit für die Bearbeitung des Werkstücks WS, selbst wenn viele Arbeitsschritte mit einer hohen Zahl an Werkzeugwechseln ggf. in kurzer Aufeinanderfolge erforderlich sein sollten, und das praktisch ohne jegliche Stillstandzeiten der Werkzeugmaschine, wie sie gewöhnlich bei Werkzeugwechseln an Werkzeugmaschinen auftreten, und zudem bei hervorragend vorteilhaft ermöglichter kompakter Bauweise der Werkzeugmaschine.

Beispielhaft umfasst die Werkzeugmaschine gemäß dem Ausführungsbeispiel der Figs. 1 bis 11 weiterhin einen Schutzkappenmechanismus 8 (siehe z.B. Figs. 1, 2, 4, 6 und 8 und 13), der ggf. automatisch öffen- und schließbar ist.

Im geöffneten Zustand ermöglicht der Schutzkappenmechanismus 8 beispielhaft das Verschwenken des Revolvers 4 mit den Arbeitsspindeln S1 und S2 zum Spindelpositionstausch zwischen der Bearbeitungs- und der Werkzeugwechselposition, und im geschlossenen Zustand verdeckt der geschlossene Schutzkappenmechanismus 8 beispielhaft die an der Werkzeugwechselposition positionierte Arbeitsspindel vorteilhaft aus dem Bearbeitungsraum der Werkzeugmaschine gesehen.

Bevorzugt trennt der Schutzkappenmechanismus 8 hierbei im geschlossenen Zustand die an der Werkzeugwechselposition positionierte Arbeitsspindel vorteilhaft vollständig vom Bearbeitungsraum der Werkzeugmaschine.

Bevorzugt ist der Schutzkappenmechanismus 8 an bzw. in der in dem Trägerabschnitt 13 des Maschinengestells 1 ausgebildeten Werkzeugwechselöffnung 131 angeordnet oder angebracht, bevorzugt derart, dass der Schutzkappenmechanismus 8 im geschlossenen Zustand die in dem Trägerabschnitt 13 des Maschinengestells 1 ausgebildete Werkzeugwechselöffnung 131 zum Bearbeitungsraum hin verschließt, wobei die an der Werkzeugwechselposition positionierte Arbeitsspindel bevorzugt auf der dem Bearbeitungsraum abgewandten Seite des geschlossenen Schutzkappenmechanismus 8 bzw. eines Schutzklappenabschnitts des geschlossenen Schutzkappenmechanismus 8 angeordnet ist, und die an der Bearbeitungsposition bzw. Arbeitsposition positionierte Arbeitsspindel auf der dem Bearbeitungsraum zugewandten Seite des geschlossenen Schutzkappenmechanismus 8 bzw. eines Schutzklappenabschnitts des geschlossenen Schutzkappenmechanismus 8 angeordnet ist.

Bespielhaft umfasst der Schutzkappenmechanismus 8 der Werkzeugmaschine gemäß Figs. 1 bis 11 einen Schutzklappenabschnitte mit Teilzylinderabschnitten umfassenden Teilzylinderkörper 81, der beispielhaft in der Werkzeugwechselöffnung 131 des Trägerabschnitts 13 des Maschinengestells 1 drehbar gelagert ist, insbesondere um eine zu der Revolverachse des Revolvers 4 bzw. den Spindelachsen parallelen Rotationsachse. Im geöffneten Zustand weist der Teilzylinderkörper 81 Öffnungen auf, die den Innenraum des Teilzylinderkörpers 81 zum Bearbeitungsraum hin und zum Werkzeugmagazin hin öffnen; siehe z.B. Fig. 13, in der die Spindeln S1 und S2 durch die Öffnungen des Teilzylinderkörpers 81 von außen sichtbar sind.

Die dem Werkzeugmagazin 10 zugewandte Öffnung des Teilzylinderkörpers 81 im geöffneten Zustand des Schutzkappenmechanismus 8 ermöglicht beispielhaft ein Zuführen des Werkzeugs bzw. der Werkzeugschnittstelle mittels der Werkzeugwechselvorrichtung 9 vom Werkzeugmagazin 10 zu der Werkzeugwechselposition, und die dem Bearbeitungsraum zugewandte Öffnung des Teilzylinderkörpers 81 im geöffneten Zustand des Schutzkappenmechanismus 8 ermöglicht vorteilhaft den Spindeltausch bzw. den Spindelpositionstausch durch Rotieren bzw. Verschwenken des Revolvers 4.

Die dem Bearbeitungsraum zugewandte Öffnung des Teilzylinderkörpers 81 im geöffneten Zustand des Schutzkappenmechanismus 8 ist beispielhaft in der Schnittdarstellung aus Fig. 8 erkennbar, wobei der Teilzylinderkörper 81 in dieser Schnittebene die Öffnung zum Bearbeitungsraum beispielhaft auf der rechten Seite aufweist und insbesondere beispielhaft einen Teilkreisförmigen Querschnitt aufweist, der beispielhaft mondsichelartig an die beispielhaft kreisrunde Form des Revolvers 4 angepasst ist. Hierbei ist beispielhaft erkennbar, dass ein Verschwenken des Teilzylinderkörpers 81 zum Schließen der Schutzkappenvorrichtung 8 vorteilhaft ermöglicht, die Arbeitsspindel S2 an der Werkzeugwechselposition abzudecken und vom Bearbeitungsraum und der Arbeits-spindel S1 an der Bearbeitungsposition räumlich abzutrennen.

Um es weiterhin vorteilhaft zu ermöglichen, dass ein Zuführen bzw. Abführen von Werkzeugen bzw. Werkzeugschnittstellen zwischen Werkzeugmagazin 10 und Werkzeugwechselposition in geschlossenem Zustand der Schutzklappenvorrichtung 8 möglich ist, weist der Teilzylinderkörper 81 der Schutzklappe beispielhaft zwei separate Teilzylinderkörperabschnitte 81a und 81b auf, die im geöffneten Zustand bevorzugt oberhalb und unterhalb der Werkzeugwechselposition angeordnet, wobei zwischen den ersten und zweiten Teilzylinderkörperabschnitten 81a und 81b zum Werkzeugmagazin 10 hin und zum Bearbeitungsraum der Werkzeugmaschine hin die jeweiligen Öffnungen ausgebildet sind.

Die ersten und zweiten Teilzylinderkörperabschnitte 81a und 81b sind bevorzugt dazu eingerichtet, die Schutzklappenvorrichtung 8 zu schließen, indem diese zu dem Bearbeitungsraum hin nach unten bzw. nach oben verschwenkt werden (siehe z.B. Fig. 13, wobei beispielhaft der geöffnete Zustand gezeigt ist). Beispielhaft kann der erste (obere) Teilzylinderkörperabschnitt 81a (allgemein: erster Schutzklappenabschnitt) zum Bearbeitungsraum hin und nach unten - in Fig. 13 beispielhaft im Uhrzeigersinn - verschwenkt werden, und beispielhaft kann der zweite (untere) Teilzylinderkörperabschnitt 81b (allgemein: zweiter Schutzklappenabschnitt) zum Bearbeitungsraum hin nach oben - in Fig. 13 beispielhaft gegen den Uhrzeigersinn - verschwenkt werden, bevorzugt derart, dass die ersten und zweiten Schutzklappenabschnitte auf der Seite des Bearbeitungsraum miteinander schließen.

Vorteilhaft wird hierbei nur die dem Bearbeitungsraum zugewandte Seite der Werkzeugwechselposition vom Bearbeitungsraum getrennt, wobei die dem Werkzeugmagazin zugewandte Seite der Werkzeugwechselposition weiter zugänglich bleibt, z.B. um vorteilhaft selbst bei geschlossener Schutzklappenvorrichtung 8 mittels der Werkzeugwechselvorrichtung bzw. dem Werkzeugwechsler-Achsschlitten 91 und dem Werkzeugwechsel-Doppelgreifer 93 zwischen dem Werkzeugmagazin 10 und Werkzeugwechselposition der Werkzeugmaschine verfahren zu können und an der an der Werkzeugwechselposition positionierten Arbeitsspindel Werkzeuge wechseln zu können.

Weiterhin umfasst die Werkzeugmaschine gemäß dem Ausführungsbeispiel nach Figs. 1 bis 11 beispielhaft eine Fördereinrichtung 7, die beispielhaft an einer Vorderseite des Maschinengestells 1 auf einem Fördereinrichtungsträgerabschnitt 73 angeordnet bzw. gehalten ist. Der Fördereinrichtungsträgerabschnitt 73 ist in Figs. 1 bis 11 beispielhaft als weiterer Abschnitt des Maschinengestells 1 bereitgestellt, so dass das Maschinengestell 1 beispielhaft neben den Trägerabschnitten 11 bis 13 weiterhin den Fördereinrichtungsträgerabschnitt 73 aufweist, wobei der Bearbeitungsraum der Werkzeugmaschine bevorzugt zwischen den gegenüberliegenden Trägerabschnitten 11 und 13 und zwischen den gegenüberliegenden Trägerabschnitten 12 und 73 gebildet ist.

Die Fördereinrichtung 7 umfasst beispielhaft einen Eingabeförderabschnitt 71 zur ggf. automatischen Zuführung eines zu bearbeitenden Werkstücks in den Bearbeitungs-raum der Werkzeugmaschine und beispielhaft einen Ausgabeförderabschnitt 72 zur ggf. automatischen Abführung bzw. Entnahme eines bearbeiteten Werkstücks aus dem Bearbeitungsraum der Werkzeugmaschine.

Der Eingabeförderabschnitt 71 der Fördereinrichtung 7 kann z.B. eine Werkstückeinspannposition (Einspannposition) aufweisen, an der ein zu bearbeitendes Werkstück WS durch die Werkstückspanneinrichtung 2 aufgenommen und eingespannt werden kann, z.B. nachdem die Werkstückspanneinrichtung 2 ein zuvor eingespanntes und bereits bearbeitetes Werkstück WS an einer Werkstückausspann- bzw. Ausgabeposition (Ausspannposition) abgelegt hat bzw. ablegen konnte, zum ggf. automatischen Wegfördern durch den die Werkstückausspann- bzw. Ausgabeposition aufweisenden Ausgabeförderabschnitt 72 der Fördereinrichtung 7.

Vor den Eingabe- und Ausgabeförderabschnitten 71 und 72 der Fördereinrichtung 7 kann die Fördereinrichtung 7 bevorzugt einen oder mehrere weitere Förderabschnitte umfassen, z.B. zum Fördern von Werkstücken zu dem Eingabeförderabschnitt 71 der Fördereinrichtung 7 und/oder zum Wegfördern von Werkstücken von dem Ausgabeförderabschnitte 72 der Fördereinrichtung 7.

In dem Ausführungsbeispiel gemäß Figs. 1 bis 11 sind die Eingabe- und Ausgabeförderabschnitte 71 und 72 der Fördereinrichtung 7 beispielhaft als Rollenförderbandabschnitte ausgebildet, jedoch ist die vorliegende Erfindung nicht auf derartige Ausführungen beschränkt und die Fördereinrichtung 7 kann zusätzlich oder alternativ auch andersartige Förderbandabschnitte umfassen, und/oder in weiteren Ausführungsbeispielen der Werkzeugmaschine mit zusätzlichen oder alternativen Automationsmaschinen, Handhabungsmaschinen, Manipulatoren und/oder Pickup-Roboter-Einrichtungen versehen sein, zum ggf. automatischen Entnehmen und/oder Bereitstellen von Werkstücken.

Wie bereits beschrieben, zeigt **Fig. 15A** eine beispielhafte Vorderansicht eines Spindelrevolvers 4 der Werkzeugmaschine aus Fig. 1 und **Fig. 15B** zeigt eine beispielhafte Perspektivdarstellung des Spindelrevolvers 4 der Werkzeugmaschine aus Fig. 1. Wie bereits vorstehend beschrieben, trägt der Spindelrevolver 4 beispielhaft die in den Spindelgehäusen 41 und 42 gehaltenen bzw. angeordneten Arbeitsspindeln S1 und S2.

Gemäß Fig. 15A, in der beispielhaft die Arbeitsspindel S2 an der linken Werkzeugwechselposition positioniert ist und die Arbeitsspindel S1 an der rechten Arbeitsposition bzw. Bearbeitungsposition positioniert ist, sind bezüglich der Mittelachse (Revolverachse) des Revolvers 4 gegenüber (d.h. insbesondere auf einer durch die Mittelachse verlaufende Ebene) angeordnet, wobei beispielhaft die Spindelachsen jeweils parallel zur Mittelachse (Revolverachse) des Revolvers 4 ausgerichtet sind. Zudem sind die Arbeitsspindeln S1 und S2 beispielhaft bei gleichem radialen Abstand zur Mittelachse (Revolverachse) des Revolvers 4 auf dem Revolver 4 angeordnet.

Dies hat den signifikanten Vorteil, dass ein Verschwenken bzw. Drehen des Revolvers 4 um dessen Mittelachse (Revolverachse) um 180 Grad im Uhrzeigersinn oder auch gegen den Uhrzeigersinn die Spindelpositionen effizient, präzise und schnell tauschen kann, insbesondere derart, dass die erste Arbeitsspindel S1 an die zuvor von der zweiten Arbeitsspindel S2 eingenommene Position (Werkzeugwechselposition) verbracht werden kann und die zweite Arbeitsspindel S2 gleichzeitig an die zuvor von der ersten Arbeitsspindel S1 eingenommene Position (Arbeits- bzw. Bearbeitungsposition) verbracht werden kann.

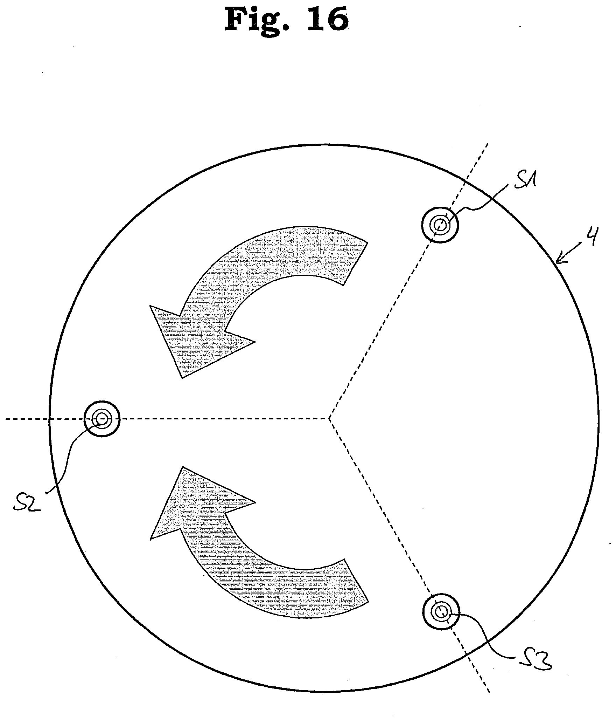

Jedoch ist die vorliegende Erfindung in keinster Weise auf ein derartiges Doppel-Spindelsystem eingeschränkt, sondern es können in weiteren Ausführungen beispielhaft mehr als zwei Spindeln, d.h. z.B. drei, vier, fünf, sechs, sieben, acht oder mehr Spindeln, auf einem Revolver (z.B. als Drehscheibe oder Trägertrommel ausgebildet) bereitgestellt werden. Hierbei ist es dann jeweils bevorzugt aber nicht in jedem Fall erforderlich, dass die Spindeln jeweils in gleichem Winkelabstand zueinander auf dem Revolver angeordnet sind, d.h. insbesondere bevorzugt bei N Spindeln bevorzugt bei einem Winkel von 360/N Grad (d.h. z.B. 180 Grad bei zwei Spindeln, wie z.B. in Fig. 15A; 120 Grad bei drei Spindeln, wie z.B. in Fig. 16; 90 Grad bei vier Spindeln; 60 Grad bei sechs Spindeln, usw.).

**Fig. 16** zeigt eine beispielhafte Vorderansicht eines Spindelrevolvers 4 einer Werkzeugmaschine gemäß einem weiteren Ausführungsbeispiel der Erfindung mit einem Dreifach-Spindelsystem (z.B. für eine Dreifachspindel-Fräsmaschine).

Hierbei sind beispielhaft eine erste Arbeitsspindel S1, eine zweite Arbeitsspindel S2 und eine dritte Arbeitsspindel S3 vorgesehen, die beispielhaft mit jeweiligen Winkelabständen von 120 Grad zueinander auf dem Revolver 4 angeordnet sind. Weiterhin sind die drei Arbeitsspindeln S1 bis S3 beispielhaft bei gleichem radialen Abstand zur Mittelachse (Revolverachse) des Revolvers 4 auf dem Revolver 4 angeordnet. Weiterhin sind die drei Arbeitsspindeln S1 bis S3 beispielhaft derart angeordnet, dass deren jeweilige Spindelachsen jeweils zueinander parallel ausgerichtet (bzw. ausrichtbar) und parallel zur Mittelachse (Revolverachse) des Revolvers 4 ausgerichtet (bzw. ausrichtbar) sind.

Analog zu dem Revolver 4 gemäß Fig. 15A könnte angenommen werden, dass die zweite Arbeitsspindel S2 an einer Werkzeugwechselposition positioniert ist, und die erste Arbeitsspindel S1 an einer Bearbeitungsposition positioniert ist, derart, dass die erste Arbeitsspindel S1 dazu eingerichtet ist, an der Bearbeitungsposition ein an der Werkstückspanneinrichtung 2 eingespanntes Werkstück bearbeiten kann, während an der zweiten Arbeitsspindel S2 an der Werkzeugwechselposition ein- bzw. ausgewechselt werden kann.

Durch Verschwenken bzw. Drehen des Revolvers 4 in Fig. 16 um 120 Grad gegen den Uhrzeigersinn kann die erste Arbeitsspindel S1 an die Werkzeugwechselposition verbracht werden, wobei gleichzeitig die dritte Arbeitsspindel S3 an die Bearbeitungsposition verbracht wird, an der zuvor die erste Arbeitsspindel S1 positioniert war; und durch Verschwenken bzw. Drehen des Revolvers 4 in Fig. 16 um 120 Grad im Uhrzeigersinn kann die zweite Arbeitsspindel S2 an die Bearbeitungsposition verbracht werden, an der zuvor die erste Arbeitsspindel S1 positioniert war, wobei gleichzeitig die dritte Arbeitsspindel S3 an die Werkzeugwechselposition verbracht wird.

Hierbei kann die Arbeitsspindel, die jeweils an der Position der Arbeitsspindel S3 in Fig. 16 positioniert ist, ggf. in einer Ruheposition positioniert sein, in der diese nicht in die Bearbeitung des Werkstücks eingreift. In weiteren Ausführungsbeispielen (insbesondere bevorzugt in Ausführungsbeispielen in "normaler" Orientierung des Werkstücks z.B. auf einem Drehtisch stehend eingespannt, anstatt der Überkopfeinspannung gemäß Figs. 1 bis 11) kann auch die Position der ersten Arbeitsspindel S1 in Fig. 16 der Ruheposition und die Position der dritten Arbeitsspindel S3 in Fig. 16 der Bearbeitungsposition entsprechen.

Weiterhin ist es bei "normaler" oder seitlicher Werkstückeinspannung als auch bei Überkopfeinspannung des Werkstücks denkbar, dass die Position der zweiten Arbeitsspindel S2 in Fig. 16 der Bearbeitungsposition entspricht, wobei die Positionen der ersten und/oder dritten Arbeitsspindel der Werkzeugwechselposition bzw. zwei Werkzeugwechselpositionen entsprechen (wobei ggf. an einer der beiden oder an beiden Spindeln bei zwei Werkzeugwechselpositionen Werkzeuge ein- bzw. ausgewechselt werden können). Hierbei können z.B. bei N Spindeln 1 bis M (mit M < N) Werkzeugwechselpositionen ggf. mit 1 bis M Werkzeugwechselmanipulatoren bzw. Werkzeugwechselgreifern oder mit Werkzeugwechselvorrichtungen mit einem oder mehreren Werkzeugwechselmanipulatoren bzw. Werkzeugwechselgreifern zum Anfahren der 1 bis M Werkzeugwechselpositionen bereitgestellt werden. Zudem können dann 1 bis N - M Bearbeitungspositionen bzw. 1 bis N - M - 1 Ruhepositionen bereitgestellt werden.

In Fig. 16 ist es weiterhin möglich, dass beide Spindeln S1 und S3 an Bearbeitungspositionen angeordnet sind, z.B. zur gleichzeitigen Bearbeitung an einem Werkstück (z.B. Bohren von zwei Löchern gleichzeitig) oder an Bearbeitungspositionen für zwei unter- bzw. übereinander eingespannten Werkstücken (z.B. ein zweites unter und an dem ersten hängend eingespannten Werkstück, oder auch ein überkopfhängend eingespanntes Werkstück und ein unter diesem hängend eingespannten Werkstück stehend eingespanntes Werkstück.

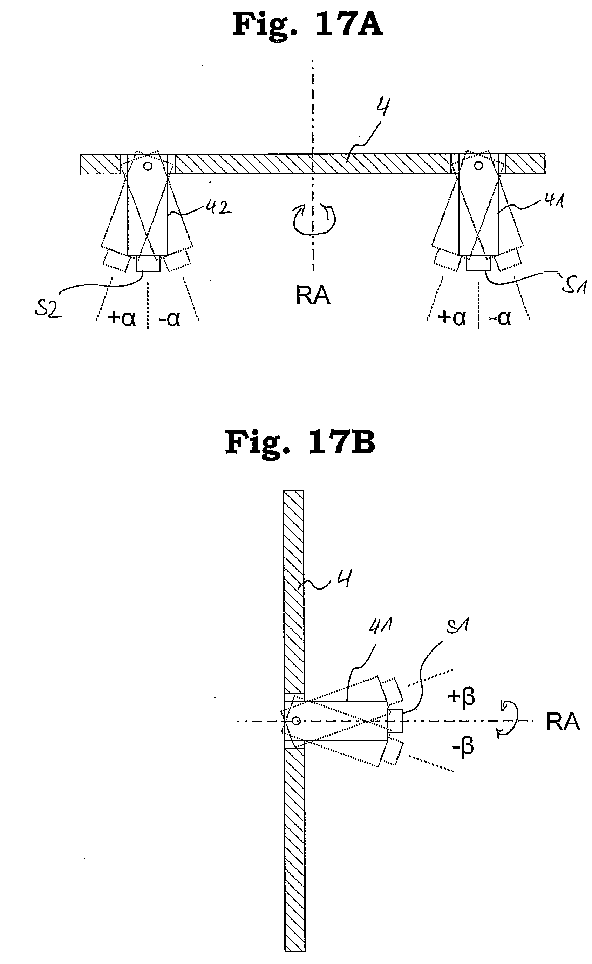

**Fig. 17A** zeigt eine beispielhafte Schnittdarstellung mit horizontaler Schnittebene durch einen Spindelrevolver 4 einer Werkzeugmaschine gemäß einem weiteren Ausführungsbeispiel der Erfindung.

Hierbei sind analog zu Figs. 15A und 15B beispielhaft zwei Spindeln S1 und S2 mit Spindelgehäusen 41 und 42 vorgesehen, die beispielhaft in Werkzeugwechsel- und Bearbeitungsposition positioniert sind und um die Revolverachse RA rotierbar sind durch Rotieren des Revolvers 4 um die Revolverachse RA sind.

Beispielhaft sind diese Arbeitsspindeln S1 und S2 beispielhaft zudem dazu eingerichtet, in einer beispielhaft horizontalen Ebene (Fig. 17A zeigt eine Draufsicht) verschwenkt zu werden, derart, dass ihre jeweiligen Spindelachsen parallel zur Revolverachse ausrichtbar sind und relativ zur Revolverachse in der mit der Revolverachse RA gemeinsamen Ebene der Spindelachsen um einen Winkel von +α und/oder -α verschenkbar sind.

**Fig. 17B** zeigt eine beispielhafte Schnittdarstellung mit vertikaler Schnittebene durch einen Spindelrevolver 4 einer Werkzeugmaschine gemäß einem weiteren Ausführungsbeispiel der Erfindung.

Hierbei sind analog zu Figs. 15A und 15B beispielhaft zwei Spindeln S1 und S2 mit Spindelgehäusen 41 und 42 vorgesehen (wobei aufgrund der Seitenansicht beispielhaft nur eine der Spindeln gezeigt ist), die beispielhaft in Werkzeugwechsel- und Bearbeitungsposition positioniert sind und um die Revolverachse RA rotierbar sind durch Rotieren des Revolvers 4 um die Revolverachse RA sind.

Beispielhaft sind diese Arbeitsspindeln S1 und S2 beispielhaft zudem dazu eingerichtet, in einer jeweiligen beispielhaft vertikalen Ebene (Fig. 17B zeigt eine Seitenansicht) verschwenkt zu werden, derart, dass ihre jeweiligen Spindelachsen parallel zur Revolverachse ausrichtbar sind und relativ zur Revolverachse vertikal um einen Winkel von +β und/oder -β verschenkbar sind.

In weiteren Ausführungsbeispielen ist es möglich die Ausführungen aus Figs. 17A und 17B zu kombinieren, derart, dass eine oder beide Spindeln vertikal und horizontal verschwenkbar sind, oder nur eine Spindeln vertikal verschwenkbar ist und/oder nur eine Spindel horizontal verschwenkbar ist.

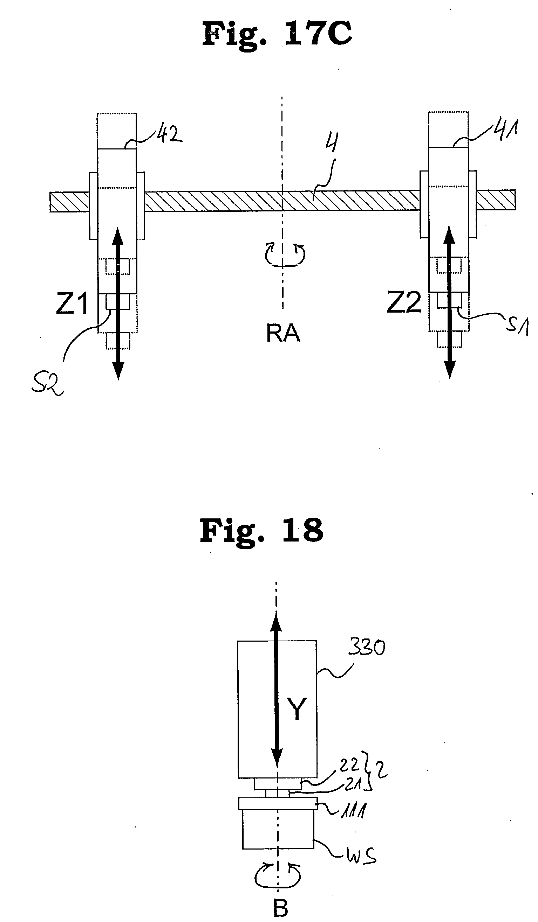

**Fig. 17C** zeigt eine beispielhafte Schnittdarstellung mit horizontaler Schnittebene durch einen Spindelrevolver 4 einer Werkzeugmaschine gemäß einem weiteren Ausführungsbeispiel der Erfindung.

Hierbei sind analog zu Figs. 15A und 15B beispielhaft zwei Spindeln S1 und S2 mit Spindelgehäusen 41 und 42 vorgesehen, die beispielhaft in Werkzeugwechsel- und Bearbeitungsposition positioniert sind und um die Revolverachse RA rotierbar sind durch Rotieren des Revolvers 4 um die Revolverachse RA sind.

Beispielhaft sind diese Arbeitsspindeln S1 und S2 beispielhaft zudem dazu eingerichtet, in Richtung Z1 bzw. Z2 ihrer jeweiligen Spindelachsen, die beispielhaft parallel zur Revolverachse RA ausgerichtet sind, bevorzugt unabhängig voneinander verfahren zu werden. In weiteren Ausführungsbeispielen kann ggf. nur eine der Spindeln in Richtung der Spindelachse verfahrbar sein, und in den vorstehend beschriebenen Ausführungsbeispielen können eine, mehrere oder alle jeweiligen Arbeitsspindeln bevorzugt unabhängig voneinander Z-verfahrbar sein (d.h. in Richtung der Spindelachse und/oder in Richtung der Revolverachse).

Falls an der Werkzeugmaschine gemäß Fig. 1 eine oder beide Spindeln Z-verfahrbar sind, dann könnte in weiteren Ausführungsbeispielen ggf. der Achsschlitten 310 und dessen steuerbar Z-Achse weggelassen werden, um die Werkzeugmaschine noch kompakter ausbilden zu können.

**Fig. 18** zeigt eine beispielhafte Vorderansicht eines Werkzeugträger-Achsschlittens 330 einer Werkzeugmaschine gemäß einem weiteren Ausführungsbeispiel der Erfindung. Dies entspricht schematisch der Ausführung gemäß Figs. 1 bis 11, wobei eine zusätzliche beispielhafte steuerbare B-Achse (bevorzugt als Drehachse ausgebildet, oder auch als Schwenkachse bzw. bevorzugt 360 Grad Schwenkachse ausgebildet) veranschaulicht ist, die dazu eingerichtet ist, das an der Werkstückspanneinrichtung 2 eingespannte Werkstück WS um eine beispielhaft vertikal ausgerichtete (d.h. beispielhaft parallel zur Y-Richtung der Y-Achse ausgerichtete) Rotationsachse zu rotieren.

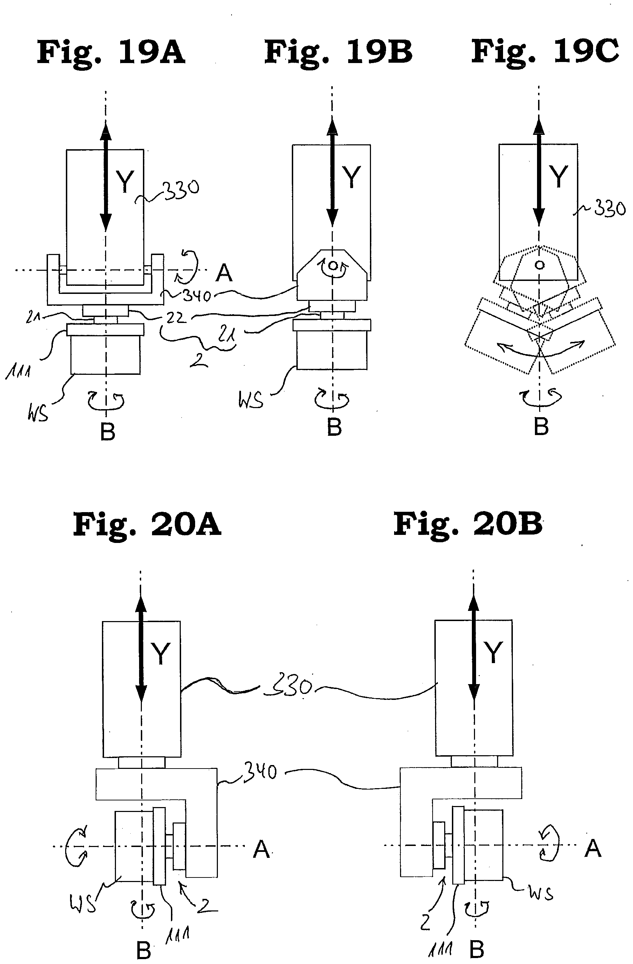

**Fig. 19A** zeigt eine beispielhafte Vorderansicht eines Werkzeugträger-Achsschlittens 330 einer Werkzeugmaschine gemäß einem weiteren Ausführungsbeispiel der Erfindung und **Figs. 19B** und **19C** zeigen beispielhafte Seitenansichten des Werkzeugträger-Achsschlittens 330 aus Fig. 19A.

Hierbei ist beispielhaft an dem Werkzeugträger-Achsschlitten 330 ein um eine horizontal bzw. senkrecht zur Y-Richtung bzw. Richtung der Y-Achse ausgerichtete Rotationsachse verschwenkbares Schwenkelement 340 einer horizontal ausgerichteten steuerbaren A-Achse (Schwenkachse) vorgesehen.

An dem Schwenkelement 340 sind beispielhaft die Greifeinrichtung 21 und der Werkstückpalettenhalter 22 bzw. ist die Werkstückspanneinrichtung 2 gehalten, die bevorzugt zudem dazu eingerichtet ist, mit einer zusätzlichen steuerbaren B-Achse (bevorzugt als Drehachse ausgebildet, oder auch als Schwenkachse bzw. bevorzugt 360 Grad Schwenkachse ausgebildet), das an der Werkstückspanneinrichtung 2 eingespannte Werkstück WS um eine beispielhaft vertikal relativ zu dem Schwenkelement 340 ausgerichtete Rotationsachse zu rotieren.

Das Schenkelement 340 ist beispielhaft dazu eingerichtet, die Werkstückspanneinrichtung 2 um eine horizontal bzw. senkrecht zur Y-Richtung bzw. Richtung der Y-Achse ausgerichtete Rotationsachse zu verschwenken, siehe Fig. 19C.

**Figs. 20A** und **20B** zeigen beispielhafte Vorderansichten eines Werkzeugträger-Achsschlittens 330 einer Werkzeugmaschine gemäß einem weiteren Ausführungsbeispiel der Erfindung.

Hierbei ist beispielhaft an dem Werkzeugträger-Achsschlitten 330 ein um eine vertikal ausgerichtete bzw. zur Y-Richtung bzw. Richtung der Y-Achse parallel ausgerichtete Rotationsachse verschwenkbares Schwenkelement 340 einer vertikal ausgerichteten steuerbaren B-Achse (Dreh- oder Schwenkachse) vorgesehen.

An dem Schwenkelement 340 sind beispielhaft die Greifeinrichtung 21 und der Werkstückpalettenhalter 22 bzw. ist die Werkstückspanneinrichtung 2 seitlich hängend gehalten, die bevorzugt zudem dazu eingerichtet ist, mit einer zusätzlichen steuerbaren A-Achse (bevorzugt als Drehachse ausgebildet, oder auch als Schwenkachse bzw. bevorzugt 360 Grad Schwenkachse ausgebildet), das an der Werkstückspanneinrichtung 2 beispielhaft seitlich hängend eingespannte Werkstück WS um eine beispielhaft horizontal relativ zu dem Schwenkelement 340 ausgerichtete Rotationsachse zu rotieren.

Das Schenkelement 340 ist beispielhaft dazu eingerichtet, die Werkstückspanneinrichtung 2 um eine vertikal ausgerichtete bzw. parallel zur Y-Richtung bzw. Richtung der Y-Achse ausgerichtete Rotationsachse zu drehen oder zu verschwenken.

Vorstehend wurden zahlreiche Beispiele bzw. Ausführungsbeispiele der vorliegenden Erfindung sowie deren Vorteile detailliert unter Bezugnahme auf die beigefügten Figuren beschrieben. Es sei erneut hervorgehoben, dass die vorliegende Erfindung jedoch in keinster Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

Zusammenfassend wird ein Werkzeugmaschinenkonzept vorgeschlagen, welches es vorteilhaft ermöglicht, auf vorteilhafte, ungewöhnliche und neuartige Weise, eine präzise arbeitende, kostengünstige, äußerst kompakte und effiziente Werkzeugmaschine mit optimal minimierten Standzeiten zu schaffen, insbesondere da jeweils zumindest eine (oder mehrere) der Spindeln an einer jeweiligen Arbeitsposition ein Werkstück bearbeiten kann während zumindest an einer anderen Spindel (oder an mehreren anderen Spindeln) an einer jeweiligen Werkzeugwechselposition ein Werkzeugwechsel durchgeführt werden kann, ohne die Bearbeitung des bzw. der Werkstücke für den Werkzeugwechsel zu unterbrechen, wobei die einzigen Unterbrechungen der eigentlichen Bearbeitung des Werkstücks bzw. der Werkstücke durch die äußerst schnellen (insbesondere bei ca. ein bis zwei Sekunden oder sogar unter einer Sekunde) Revolverdrehungen des Revolvers gegeben sind.

**Bezugszeichenliste**

| | | | |
|---|---|---|---|
| 1 | Maschinengestell | S1 | erste Arbeitsspindel |
| 11 | erster Trägerabschnitt | S2 | zweite Arbeitsspindel |
| 12 | zweiter Trägerabschnitt | S3 | dritte Arbeitsspindel |
| 121 | Späneabführöffnung | 5 | Standfußelemente |
| 13 | dritter Trägerabschnitt | 6 | Späneauffangwanne |
| 131 | Werkzeugwechselöffnung | | |
| 2 | Werkstückspanneinrichtung | 7 | Fördereinrichtung |
| 21 | Greifeinrichtung | 71 | Eingabeförderabschnitt |
| 22 | Werkstückpalettenhalter | 72 | Ausgabeförderabschnitt |
| | | 73 | Fördereinrichtungsträgerabschnitt |
| 3 | Achsschlitten-Baugruppe | 8 | Schutzklappenvorrichtung |
| 31 | Z-Achse | 81 | Schutzklappe |
| 310 | erster Achsschlitten | 81a | erster Schutzklappenabschnitt |
| 311 | erste Achsführungen | 81b | zweiter Schutzklappenabschnitt |
| 312 | erste Gewindewelle | 9 | Werkzeugwechselvorrichtung |
| 313 | erster Achsantrieb | | |
| 32 | X-Achse | 91 | Werkzeugwechsler-Achsschlitten |
| | | 92 | Werkzeugwechsler-Greiferträger |
| 320 | zweiter Achsschlitten | 93 | Werkzeugwechsel-Doppelgreifer |
| 321 | zweite Achsführungen | 94 | Werkzeugwechsler-Achsführungen |
| 322 | zweite Gewindewelle | 95 | Werkzeugwechsler-Schlittenträger |
| 323 | zweiter Achsantrieb | 96a | Werkzeugwechsler-Antriebsgehäuse |
| 33 | Y-Achse | 96b | Doppelgreifer-Schwenkantrieb |
| 330 | dritter Achsschlitten | 10 | Werkzeugmagazin |
| 331 | dritte Achsführungen | | |
| 332 | dritte Gewindewelle | 101 | Magazinrad |
| 333 | dritter Achsantrieb | 102 | Werkzeugmagazinträger |
| 340 | Schwenkelement | 111 | Werkstückpalette |
| 4 | Spindelrevolver/Revolver | WS | Werkstück |
| RA | Revolverachse | WZK | Werkzeugköcher |
| 41 | erstes Spindelgehäuse | A | zweite Dreh- bzw. Schwenkachse |
| 42 | zweites Spindelgehäuse | B | erste Dreh- bzw. Schwenkachse |

## Patentansprüche

1. Werkzeugmaschine mit:
- einem Maschinengestell (1);
- einer Werkstückspanneinrichtung (2) zum Einspannen eines Werkstücks (WS);
- einer an dem Maschinengestell angeordneten Achsschlitten-Baugruppe (3), die dazu eingerichtet ist, das an der Werkstückspanneinrichtung (2) eingespannte Werkstück (WS) mittels zumindest einer steuerbaren Linearachse (X;Y;Z) linear zu verfahren;
- einer an dem Maschinengestell (1) angeordneten Spindelträger-Baugruppe mit zwei oder mehr werkzeugtragenden Arbeitsspindeln (S1, S2; S1, S2, S3);
- einem Werkzeugmagazin (10), das dazu eingerichtet ist, eine Mehrzahl von Werkzeugen vorzuhalten, und
- einer Werkzeugwechselvorrichtung (9), die dazu eingerichtet ist, ein einzusetzendes Werkzeug an einer an der Werkzeugwechselposition positionierten Arbeitsspindel einzusetzen, ein an der an der Werkzeugwechselposition positionierten Arbeitsspindel aufgenommenes Werkzeug zu entnehmen, und/oder ein an der an der Werkzeugwechselposition positionierten Arbeitsspindel aufgenommenes Werkzeug mit einem aus dem Werkzeugmagazin entnommenen Werkzeug auszuwechseln;
wobei die Arbeitsspindeln (S1, S2; S1, S2, S3) an einem um eine Revolverachse (RA) rotierbaren bzw. verschwenkbaren Revolver (4) in jeweils gleichem Abstand zur Revolverachse angeordnet sind, und die Spindelachsen der Arbeitsspindeln (S1, S2; S1, S2, S3) parallel zueinander und parallel zur Revolverachse (RA) ausgerichtet bzw. ausrichtbar sind; und
wobei eine erste werkzeugtragende Arbeitsspindel (S1) und eine zweite Arbeitsspindel (S2) der zwei oder mehr werkzeugtragenden Arbeitsspindeln relativ zu der Revolverachse (RA) gegenüberliegend an dem rotierbaren Revolver (4) angeordnet sind, wobei die erste Ärbeitsspindel (S1) an einer Bearbeitungsposition der Werkzeugmaschine positioniert ist, wenn die zweite Arbeitsspindel (S2) an der Werkzeugwechselposition der Werkzeugmaschine positioniert ist, und die zweite Arbeitsspindel (S2) an der Bearbeitungsposition der Werkzeugmaschine positioniert ist, wenn die erste Arbeitsspindel (S1) an der Werkzeugwechselposition der Werkzeugmaschine positioniert ist, und wobei die Spindelträger-Baugruppe dazu eingerichtet ist, die Positionierung der ersten Arbeitsspindel (S1) durch Verschwenken des rotierbaren Revolvers um die Revolverachse um 180° mit der Positionierung der zweiten Arbeitsspindel zu tauschen, oder
wobei eine Anzahl N von werkzeugtragenden Arbeitsspindeln mit N > 2 in einem jeweiligen Winkelabstand eines Winkels α = 360°/ N an dem rotierbaren Revolver (4) angeordnet sind, wobei eine erste Arbeitsspindel der N Arbeitsspindeln an der Bearbeitungsposition der Werkzeugmaschine positioniert ist, wenn eine zweite Arbeitsspindel der N Arbeitsspindeln an der Werkzeugwechselposition der Werkzeugmaschine positioniert ist, und wobei die Spindelträger-Baugruppe dazu eingerichtet ist, die erste Arbeitsspindel durch Drehen des rotierbaren Revolvers um die Revolverachse um den Winkel α an die Werkzeugwechselposition zu verschwenken und/oder die zweite Arbeitsspindel durch Drehen des rotierbaren Revolvers um die Revolverachse um den Winkel α in entgegengesetzter Richtung an die Bearbeitungsposition zu verschwenken.

2. Werkzeugmaschine gemäß Anspruch 1, **dadurch gekennzeichnet, dass**
das Maschinengestell (1) einen Bearbeitungsraum ausbildet und die Achsschlitten-Baugruppe (3) über dem Bearbeitungsraum auf dem Maschinengestell (1) angeordnet ist,
wobei die Werkstückspanneinrichtung (2) an der Achsschlitten-Baugruppe (3) gehalten wird und dazu eingerichtet ist, das Werkstück (WS) bzw. eine das Werkstück (WS) haltende Werkstückpalette (111) hängend oder seitlich hängend einzuspannen, insbesondere zur Überkopfbearbeitung des an der Werkstückspanneinrichtung (2) hängend eingespannten Werkstücks (WS).

3. Werkzeugmaschine gemäß Anspruch 2, **dadurch gekennzeichnet, dass**
die Werkstückspanneinrichtung (2) einen hängenden Drehtisch mit vertikaler Rotationsachse und/oder eine um eine vertikale Rotationsachse rotierbare Greifeinrichtung (22) zum hängenden Greifen des Werkstücks bzw. der Werkstückpalette (111) umfasst, wobei der Drehtisch und/oder die Greifeinrichtung (22) der Werkstückspanneinrichtung (2) insbesondere um eine horizontale Dreh- oder Schwenkachse dreh- oder verschwenkbar ist; oder
die Werkstückspanneinrichtung (2) einen Drehtisch mit horizontaler Dreh- oder Schwenkachse und/oder eine um eine horizontale Rotationsachse rotierbare Greifeinrichtung (22) zum seitlich hängenden Greifen des Werkstücks bzw. der Werkstückpalette (11) umfasst, wobei der Drehtisch und/oder die Greifeinrichtung (22) der Werkstückspanneinrichtung (2) insbesondere um eine vertikale Dreh- oder Schwenkachse dreh- oder verschwenkbar ist.

4. Werkzeugmaschine gemäß Anspruch 2 oder 3, **gekennzeichnet durch**
eine Fördereinrichtung (7) zum Fördern von Werkstücken (WS), insbesondere mit nach oben oder seitlich ausgerichteter Werkstückpalette (111), zu einer Einspannposition in einen Bearbeitungsraum der Werkzeugmaschine zur Aufnahme durch die Werkstückspanneinrichtung (2) von oben zum hängenden oder seitlich hängenden Einspannen eines der Werkstücke an der Werkstückspanneinrichtung (2), und zum Fördern eines der Werkstücke, insbesondere mit nach oben oder seitlich ausgerichteter Werkstückpalette (111), aus einer Ausspannposition aus dem Bearbeitungsraum der Werkzeugmaschine nach Lösen des Werkstücks aus der hängenden oder seitlich hängenden Einspannung durch die Werkstückspanneinrichtung (2).

5. Werkzeugmaschine gemäß einem der vorstehenden Ansprüche, **dadurch gekennzeichnet, dass**
die Achsschlitten-Baugruppe (3) weiterhin dazu eingerichtet ist, das an der Werkstückspanneinrichtung (2) eingespannte Werkstück mittels einer steuerbaren ersten Dreh- oder Schwenkachse (B) um eine erste Rotationsachse zu rotieren, wobei die erste Rotationsachse der ersten Dreh- oder Schwenkachse (B) insbesondere vertikal ausgerichtet ist.

6. Werkzeugmaschine gemäß Anspruch 5, **dadurch gekennzeichnet, dass**
die Achsschlitten-Baugruppe (3) weiterhin dazu eingerichtet ist, das an der Werkstückspanneinrichtung (2) eingespannte Werkstück mittels einer steuerbaren zweiten Dreh- oder Schwenkachse (A) um eine quer oder senkrecht zur ersten Rotationsachse ausgerichtete zweite Rotationsachse zu rotieren, wobei die zweite Rotationsachse der zweiten Dreh- oder Schwenkachse (A) insbesondere horizontal ausgerichtet ist.

7. Werkzeugmaschine gemäß einem der vorstehenden Ansprüche, **dadurch gekennzeichnet, dass**
die Revolverachse (RA) horizontal ausgerichtet ist.

8. Werkzeugmaschine gemäß einem der vorstehenden Ansprüche, **dadurch gekennzeichnet, dass**
die an der Bearbeitungsposition positionierte Arbeitsspindel mittels eines aufgenommenen Werkzeugs dazu eingerichtet ist, das an der Werkstückspanneinrichtung (2) eingespannte Werkstück (WS) zu bearbeiten, während die Werkzeugwechselvorrichtung (9) an der an der Werkzeugwechselposition positionierten Arbeitsspindel ein Werkzeug einsetzt, entnimmt oder mit einem aus dem Werkzeugmagazin (10) entnommenen Werkzeug auswechselt.

9. Werkzeugmaschine gemäß einem der vorstehenden Ansprüche, **gekennzeichnet durch**
eine automatisch öffen- und schließbare Schutzklappenvorrichtung (8), die in geschlossenem Zustand einen die Werkstückspanneinrichtung (2) aufweisenden Bearbeitungsraum der Werkzeugmaschine von einem die Werkzeugwechselvorrichtung (9) aufweisenden Werkzeugwechselraum der Werkzeugmaschine trennt, und die Schutzklappenvorrichtung (8) insbesondere öffnet, wenn durch Rotieren des Revolvers (4) eine der Arbeitsspindeln aus der Werkzeugwechselposition oder aus einer Ruheposition bzw. in die Bearbeitungsposition und/oder eine andere der Arbeitsspindeln aus der Bearbeitungsposition oder aus einer Ruheposition bzw. in die Werkzeugwechselposition verschwenkt wird, und insbesondere nach dem Rotieren des Revolvers (4) schließt.

10. Werkzeugmaschine gemäß einem der der vorhergehenden Ansprüche, **dadurch gekennzeichnet, dass**
die an dem rotierbaren Revolver (4) angeordneten Arbeitsspindeln feststehend mit zu der Revolverachse (RA) parallel ausgerichteten Spindelachsen befestigt sind; oder
eine oder mehrere der an dem rotierbaren Revolver (4) angeordneten Arbeitsspindeln verschwenkbar gehalten sind.

11. Werkzeugmaschine gemäß einem der der vorhergehenden Ansprüche, **dadurch gekennzeichnet, dass**
eine oder mehrere der an dem rotierbaren Revolver (4) angeordneten Arbeitsspindeln in einer Richtung mittels einer Linearachse (Z1, Z2) parallel zur Spindelachse und/oder parallel zur Revolverachse verfahrbar sind.

## Claims

1. A machine tool, comprising:
- a machine frame (1);
- a workpiece clamping device (2) for clamping a workpiece (WS);
- an axis slide assembly (3) arranged on said machine frame and configured to linearly move said workpiece (WS) clamped on said workpiece clamping device (2) by means of at least two controllable linear axes (X;Y;Z);
- a spindle carrier assembly arranged on said machine frame (1) and having at least two tool-carrying work spindles (S1, S2; S1, S2, S3);
- a tool magazine (10) configured to have a plurality of tools available; and
- a tool change device (9) configured to insert a tool to be inserted on one of the work spindles positioned at the tool change position, remove a tool received on the work spindle positioned at the tool change position, and/or replace a tool received on the work spindle positioned at the tool change position with a tool taken from said tool magazine;
wherein said work spindles (S1, S2; S1, S2, S3) are arranged on a turret (4) rotatable or pivotable about a turret axis (RA) at equal distance from the turret axis, respectively, and the spindle axes of the work spindles (S1, S2; S1, S2, S3) are oriented or orientable in parallel to each other and in parallel to the turret axis (RA); and
wherein a first tool-carrying work spindle (S1) and a second work spindle (S2) of said at least two tool-carrying work spindles are arranged opposite each other with respect to said turret axis (RA) on said rotatable turret (4), wherein said first work spindle (S1) is positioned at a processing position of said machine tool when said second work spindle (S2) is positioned at the tool change position of said machine tool, and said second work spindle (S2) is positioned at the processing position of said machine tool when said first work spindle (S1) is positioned at the tool change position of said machine tool, and wherein said spindle carrier assembly is configured to switch the positioning of said first work spindle (S1) with the positioning of said second work spindle by pivoting said rotatable turret about said turret axis by 180 degrees; or
wherein a number N of tool carrying work spindles, with N > 2, are arranged on said rotatable turret (4) at a respective angular distance of an angle α = 360°/N, wherein a first work spindle of said N work spindles is positioned at the processing position of said machine tool when a second work spindle of said N work spindles is positioned at the tool change position of said machine tool, and wherein said spindle carrier assembly is configured to pivot said first work spindle to the tool change position by rotating said rotatable turret about said turret axis by the angle α and/or to pivot said second work spindle to the processing position by rotating said rotatable turret about said turret axis by the angle α in the opposing direction.

2. The machine tool according to claim 1, **characterized in that**
said machine frame (1) forms a processing area and said axis slide assembly (3) is arranged above the processing area on said machine frame (1),
wherein said workpiece clamping device (2) is held on said axis slide assembly (3) and is configured to clamp said workpiece (WS) or a workpiece pallet (111) holding said workpiece (WS) in suspended or laterally suspended fashion, in particular for overhead processing of said workpiece (WS) clamped in suspended fashion on said workpiece clamping device (2).

3. The machine tool according to claim 2, **characterized in that**
said workpiece clamping device (2) comprises a suspended rotary table with vertical rotation axis and/or a gripping device (22) rotatable about a vertical rotation axis for gripping said workpiece or said workpiece pallet (111) in a suspended manner, wherein said rotary table and/or said gripping device (22) of said workpiece clamping device (2) are in particular rotatable or pivotable about a horizontal rotary or swivel axis; or
said workpiece clamping device (2) comprises a rotary table with horizontal rotary or swivel axis and/or a gripping device (22) rotatable about a horizontal rotation axis for gripping said workpiece or said workpiece pallet (111) in a laterally suspended manner, wherein said rotary table and/or said gripping device (22) of said workpiece clamping device (2) is in particular rotatable or pivotable about a vertical rotary or swivel axis.

4. The machine tool according to claims 2 or 3, **characterized in that**
a conveying device (7) for conveying workpieces (WS), in particular with upwardly or laterally oriented workpiece pallet (111), to a clamping position in a processing area of said machine tool in order to be received by said workpiece clamping device (2) from above for suspended or laterally suspended clamping of one of the workpieces on said workpiece clamping device (2) and for conveying one of the workpieces, in particular with upwardly or laterally oriented workpiece pallet (111), from an unclamping position out of the processing area of said machine tool after releasing the workpiece from the suspended or laterally suspended clamping by said workpiece clamping device (2).

5. The machine tool according to one of the preceding claims, **characterized in that**
said axis slide assembly (3) is further configured to rotate said workpiece clamped on said workpiece clamping device (2) by means of a controllable first rotary or swivel axis (B) about a first rotation axis, wherein, in particular, the first rotation axis of the first rotary or swivel axis (B) is vertically oriented.

6. The machine tool according to claim 5, **characterized in that**
said axis slide assembly (3) is further configured to rotate said workpiece clamped on said workpiece clamping device (2) by means of a controllable second rotary or swivel axis (A) about a second rotation axis oriented transversely or perpendicularly with respect to said first rotation axis, wherein, in particular, said second rotation axis of said second rotary or swivel axis (A) is horizontally oriented.

7. The machine tool according to one of the preceding claims, **characterized in that**
said turret axis (RA) is oriented horizontally.

8. The machine tool according to one of the preceding claims, **characterized in that**
said work spindle positioned at the processing position is configured by means of a received tool to process said workpiece (WS) clamped on said workpiece clamping device (2) while said tool change device (9) inserts or removes a tool at said work spindle positioned at the tool change position, or replaces it with a tool taken from said tool magazine (10).

9. The machine tool according to one of the preceding claims, **characterized in that**
a protective cover device (8) which is automatically openable and closable, and which, in the closed state, separates a processing area of said machine tool including said workpiece clamping device (2) from a tool change area of said machine tool including said tool change device (9), and, in particular, opens said protective cover device (8) when, by rotating said turret (4), one of the work spindles is pivoted from the tool change position or from a resting position to the processing position and/or another of the work spindles is pivoted from the processing position or from a resting position to the tool change position, and, in particular, closes it after rotating said turret (4).

10. The machine tool according to one of the preceding claims, **characterized in that**
said work spindles arranged on said rotatable turret (4) are fixedly attached to the spindle axes oriented in parallel to the turret axis (RA); or
one or more or the work spindles arranged on said rotatable turret (4) are held in a pivotable manner.

11. The machine tool according to one of the preceding claims, **characterized in that**
one or more of the work spindles arranged on said rotatable turret (4) are movable in one direction by means of a linear axis (Z1, Z2) in parallel to the spindle axis and/or in parallel to the turret axis.

## Revendications

1. Machine-outil, comportant :
- un bâti de machine (1) ;
- un moyen de serrage de pièce à usiner (2) pour serrer une pièce à usiner (WS) ;
- un groupe structurel à chariot d'axe (3) agencé sur le bâti de machine et conçu pour déplacer linéairement la pièce à usiner (WS), serrée sur le moyen de serrage (2), au moyen d'au moins un axe linéaire commandé (X; Y; Z) ;
- un groupe structurel à support de broche agencé sur le bâti de machine (1) et comportant deux ou plusieurs broches de travail (S1, S2 ; S1, S2, S3) portant des outils ;
- un magasin d'outils (10) qui est conçu pour présenter une pluralité d'outils, et
- un dispositif de changement d'outils (9) qui est conçu pour mettre en place un outil à mettre en place sur une broche de travail positionnée dans la position de changement d'outils, pour prélever un outil reçu sur la broche de travail positionnée dans la position de changement d'outils, et/ou pour changer un outil reçu sur la broche de travail positionnée dans la position de changement d'outils contre un outil prélevé dans le magasin d'outils;
dans laquelle
les broches de travail (S1, S2 ; S1, S2, S3) sont agencées sur une tourelle (4), mobile en rotation ou en basculement autour d'un axe de tourelle (RA), à une même distance respective de l'axe de tourelle, et les axes des broches de travail (S1, S2 ; S1, S2, S3) sont orientés ou susceptibles d'être orientés parallèlement les uns aux autres et parallèlement à l'axe de tourelle (RA) ; et
- une première broche de travail (S1) portant un outil et une seconde broche de travail (S2) desdites deux ou plusieurs broches de travail portant des outils sont agencées sur la tourelle rotative (4) en étant en regard par rapport à l'axe de tourelle (RA), la première broche de travail (S1) étant positionnée dans une position d'usinage de la machine-outil lorsque la seconde broche de travail (S2) est positionnée dans la position de changement d'outils de la machine-outil, et la seconde broche de travail (S2) est positionnée dans la position d'usinage de la machine-outil lorsque la première broche de travail (S1) est positionnée dans la position de changement d'outils de la machine-outil, et le groupe structurel à porte-broche est conçu pour changer le positionnement de la première broche de travail (S1) contre le positionnement de la seconde broche de travail par basculement de la tourelle rotative de 180° autour de l'axe de tourelle, ou
un nombre N de broches de travail portant des outils avec N > 2 est agencé sur la tourelle rotative (4) à une distance angulaire respective d'un angle α = 360°/N, une première broche de travail parmi les N broches de travail étant positionnée dans la position d'usinage de la machine-outil lorsqu'une seconde broche de travail parmi les N broches de travail est positionnée dans la position de changement d'outils de la machine-outil, et le groupe structurel à porte-broche est conçu pour faire basculer la première broche de travail jusque dans la position de changement d'outils par rotation de la tourelle rotative de l'angle α autour de l'axe de tourelle, et/ou pour faire basculer la seconde broche de travail jusque dans la position d'usinage par rotation de la tourelle rotative autour de l'axe de tourelle de l'angle a, dans la direction opposée.

2. Machine-outil selon la revendication 1, **caractérisée en ce que**
le bâti de machine (1) forme un espace d'usinage et le groupe structurel à chariot d'axe (3) est agencé au-dessus de l'espace d'usinage sur le bâti de machine (1),
le moyen de serrage de pièce (2) est retenu sur le groupe structurel à chariot d'axe (3) et est conçu pour serrer de façon suspendue ou suspendue latéralement la pièce à usiner (WS) ou une palette porte-pièce (111) retenant la pièce à usiner (WS), en particulier pour l'usinage tête en bas de la pièce à usiner (WS) serrée de façon suspendue sur le moyen de serrage de pièce (2).

3. Machine-outil selon la revendication 2, **caractérisée en ce que**
le moyen de serrage de pièce (2) comprend une table tournante suspendue ayant un axe de rotation vertical et/ou un moyen de préhension (22) rotatif autour d'un axe de rotation vertical pour la préhension suspendue de la pièce à usiner ou de la palette porte-pièce (111), la table tournante et/ou le moyen de préhension (22) du moyen de serrage de pièce (2) étant mobile en révolution ou basculement en particulier autour d'un axe de révolution ou de basculement horizontal ; ou
le moyen de serrage de pièce (2) comprend une table tournante ayant un axe de révolution ou de basculement horizontal et/ou un moyen de préhension (22) rotatif autour d'un axe de rotation horizontal pour la préhension latéralement suspendue de la pièce à usiner ou de la palette porte-pièce (111),
la table tournante et/ou le moyen de préhension (22) du moyen de serrage de pièce (2) étant en particulier mobile en révolution ou basculement autour d'un axe de révolution ou de basculement vertical.

4. Machine-outil selon la revendication 2 ou 3, **caractérisée par**
un moyen de convoyage (7) pour convoyer des pièces à usiner (WS), en particulier avec une palette porte-pièce (111) orientée vers le haut ou latéralement, jusque dans une position de serrage dans un espace d'usinage de la machine-outil pour la réception par le moyen de serrage de pièce (2) depuis le haut en vue d'un serrage suspendu ou suspendu latéralement de l'une des pièces à usiner sur le moyen de serrage de pièce (2), et pour convoyer l'une des pièces à usiner, en particulier avec la palette porte-pièce (111) orientée vers le haut ou latéralement, depuis une position de desserrage hors de l'espace d'usinage de la machine-outil, une fois que la pièce à usiner est détachée du serrage suspendue ou suspendu latéralement par le moyen de serrage de pièce (2).

5. Machine-outil selon l'une des revendications précédentes, **caractérisée en ce que**
le groupe structurel à chariot d'axe (3) est en outre conçu pour faire tourner la pièce à usiner serrée sur le moyen de serrage de pièce (2) à l'aide d'un premier axe de révolution ou de basculement commandé (B) autour d'un premier axe de rotation, le premier axe de rotation du premier axe de révolution ou de basculement (B) étant orienté en particulier verticalement.

6. Machine-outil selon la revendication 5, **caractérisé en ce que**
le groupe structurel à chariot d'axe (3) est en outre conçu pour faire tourner la pièce à usiner serrée sur le moyen de serrage de pièce (2) autour d'un second axe de rotation orienté transversalement ou perpendiculairement au premier axe de rotation à l'aide d'un second axe de révolution ou de basculement commandé (A), le second axe de rotation du premier axe de révolution ou de basculement (A) étant orienté en particulier verticalement.

7. Machine-outil selon l'une des revendications précédentes, **caractérisée en ce que**
l'axe de tourelle (RA) est orienté horizontalement.

8. Machine-outil selon l'une des revendications précédentes, **caractérisée en ce que**
la broche de travail positionnée dans la position d'usinage et pourvue d'un outil reçu est conçue pour usiner la pièce à usiner (WS) serrée dans le moyen de serrage de pièce (2) pendant que le dispositif de changement d'outils (9) met en place un outil sur la broche de travail positionnée dans la position de changement d'outils, le prélève ou le change contre un outil prélevé dans le magasin d'outils (10).

9. Machine-outil selon l'une des revendications précédentes, **caractérisée par**
un dispositif à volet de protection (8) susceptible d'être ouvert et fermé automatiquement qui, dans l'état fermé, sépare un espace d'usinage de la machine-outil, présentant le moyen de serrage de pièce (2), vis-à-vis d'un espace de changement d'outils de la machine-outil, présentant le dispositif de changement d'outils (9), et le dispositif à volet de protection (9) s'ouvre en particulier lorsque l'une des broches de travail est basculée, par rotation de la tourelle (4), hors de la position de changement d'outils ou hors d'une position de repos jusque dans la position d'usinage, et/ou une autre des broches de travail est basculée hors de la position d'usinage ou d'une position de repos jusque dans la position de changement d'outils, et se ferme en particulier après la rotation de la tourelle (4).

10. Machine-outil selon l'une des revendications précédentes, **caractérisée en ce que**
les broches de travail agencées sur la tourelle rotative (4) sont fixées stationnairement avec des axes de broche orientés parallèlement à l'axe de tourelle (RA) ; ou
une ou plusieurs des broches de travail agencées sur la tourelle rotative (4) sont maintenues de façon mobile en basculement.

11. Machine-outil selon l'une des revendications précédentes, **caractérisée en ce que**
une ou plusieurs des broches de travail agencées sur la tourelle rotative (4) sont mobiles dans une direction au moyen d'un axe linéaire (Z1, Z2) parallèlement à l'axe de broche et/ou parallèlement à l'axe de tourelle.
